# EUROPÄISCHE PATENTSCHRIFT

(11) **EP 3 402 983 B1**
(45) Veröffentlichungstag und Bekanntmachung des Hinweises auf die Patenterteilung: **18.08.2021**
(21) Anmeldenummer: 17702528.5
(22) Anmeldetag: 09.01.2017
(51) Int. Cl.: F03D 7/02

(54) **WINDKRAFTANLAGE**
WIND TURBINE
ÉOLIENNE

(30) Priorität: 16.01.2016 DE 102016100680
(43) Veröffentlichungstag der Anmeldung: 21.11.2018
(73) Patentinhaber: Nidec SSB Wind Systems GmbH, 48499 Salzbergen (DE)
(72) Erfinder: BÜLTEL, Tobias, 48432 Rheine (DE); DAEMBERG, Tobias, 49932 Thuine (DE); BERTOLOTTI, Fabio, 48455 Bad Bentheim (DE)
(74) Vertreter: Bossmeyer, Jörg Peter
(86) Internationale Anmeldenummer: PCT/EP2017/050316
(87) Internationale Veröffentlichungsnummer: WO 2017/121697

(56) Entgegenhaltungen:
- EP-A1- 2 578 876
- EP-A1- 2 589 800
- EP-A2- 1 739 807
- DE-A1-102008 025 944
- DE-A1-102009 025 819

## Beschreibung

Die Erfindung betrifft eine Windkraftanlage mit einem durch Windkraft drehbaren Rotor, der eine Rotornabe und wenigstens ein an dieser drehbar gelagertes Rotorblatt aufweist, einer übergeordneten Betriebssteuereinrichtung und einem mit dieser in Kommunikationsverbindung stehenden und zur Notabschaltung der Windkraftanlage einsetzbare Komponenten aufweisenden Blattwinkelverstellsystem, mittels welchem das Rotorblatt relativ zu der Rotornabe drehbar und somit in unterschiedliche Blattwinkelstellungen positionierbar ist, wobei Steuerbefehle zum Positionieren des Rotorblatts von der Betriebssteuereinrichtung an das Blattwinkelverstellsystem abgebbar sind und wobei das Blattwinkelverstellsystem in einem Normalbetrieb der Windkraftanlage den Steuerbefehlen folgt und das Rotorblatt entsprechend positioniert. Ferner betrifft die Erfindung ein Verfahren zum Überprüfen der Funktionsfähigkeit von zur Notabschaltung einer Windkraftanlage einsetzbarerer Komponenten.

Zur Notabschaltung einer Windkraftanlage wird diese in einen sicheren Anlagenzustand überführt, indem ein oder mehrere Rotorblätter durch ein Blattwinkelverstellsystem (Pitch-System) um ihre Blattachsen in eine definierte Blattwinkelstellung gedreht werden. Der sichere Anlagenzustand kann in der Regel nur dann erreicht werden, wenn mindestens ein Rotorblatt in die definierte Blattwinkelstellung, die auch als sichere Blattwinkelstellung oder als Fahnenstellung bezeichnet wird, gedreht werden kann. Auch im Falle verschiedener Störungen, wie z.B. Netzspannungsausfall oder Überdrehzahl des Rotors, muss dieser sichere Anlagenzustand unter allen Umständen erreicht werden können. Die Anforderung, diesen Zustand einzunehmen, erhält das Pitch-System in Form wenigstens eines Notabschaltungs-Steuersignals, welches insbesondere als EFC-Signal (Emergency Feather Command) bezeichnet wird. Dieses Signal kann auch in Form mehrerer redundanter Signale zur Verfügung gestellt werden. Insbesondere wird dieses Signal von wenigstens einer oder mehreren Instanzen der Windkraftanlage zur Verfügung gestellt.

Während der Notabschaltung (EFC-Betrieb) werden unter Umständen Komponenten (z.B. Bauteile, Schaltungsteile) des Systems benötigt, die im normalen Blattwinkelverstellbetrieb (Pitch-Betrieb) nicht genutzt und somit nicht auf Funktion und Verfügbarkeit geprüft werden können. Nach aktuellen Richtlinien und Regularien wird aber gefordert, eine kontinuierliche Aussage über die Verfügbarkeit und Funktion der Sicherheitsmechanismen treffen zu können. Aus diesem Grund wird derzeit der EFC-Betrieb durch die übergeordnete Betriebssteuerungseinrichtung der Windkraftanlage zyklisch ausgelöst. Auf diese Anforderung hin müssen alle Blätter der Windkraftanlage mit definierter Geschwindigkeit und Richtung um ihre Blattachse gedreht werden und dürfen erst stoppen, wenn Endschalter betätigt werden. Die oder die redundant vorgesehenen Endschalter sind dabei mechanisch derart angebracht, dass deren Betätigung erfolgt, wenn der sichere Zustand erreicht ist. Die übergeordnete Betriebssteuerungseinrichtung beobachtet das Verhalten des Pitch-Systems während des EFC-Betriebs und leitet daraus eine Aussage über die Funktionsfähigkeit ab. Die Häufigkeit der zyklischen Stillsetzungen der Windkraftanlage variiert in der Praxis, liegt aber im Bereich von ca. einmal pro Woche.

Aus Redundanzgründen sind in der Regel zwei Endschalter je Rotorblatt angebracht, wobei der zweite Endschalter nur dann schaltet oder betätigt wird, wenn der erste Endschalter versagt. Die Windkraftanlage kann in der Regel mit ihren Rotorblättern die den zweiten Endschaltern zugeordneten Blattwinkelstellungen nicht automatisch verlassen, sodass ein Techniker vor Ort zunächst den Schaden am ersten Endschalter beheben und danach die Anlage manuell in Betrieb nehmen muss. Die Methode des zyklischen Stillsetzens deckt also nur den Test des ersten Endschalters ab, wobei die Anlage bei Versagen des ersten Endschalters während des Tests endgültig am zweiten Endschalter gestoppt wird.

Der jeweilige Umrichter oder die jeweilige Steuerung jeder Achse erfasst den jeweiligen Blattwinkel über einen oder mehrere Drehwinkelgeber oder Sensoren wie z.B. Absolutwertgeber. Bei Rückführung mehrerer Blattwinkelwerte können somit z.B. Wellenbrüche überprüft werden oder aus der redundanten Winkelinformation eine gegenseitige Plausibilitätsprüfung vorgenommen werden. Heutzutage werden Pitch-Systeme häufig so ausgelegt, dass die Blattwinkelverstellung über einen Umrichter mit kapazitivem Zwischenkreis ausgeführt wird, um immer einen geregelten Betrieb zu gewährleisten und unnötige Blattlasten zu vermeiden. Der Zwischenkreis ist dabei einerseits über einen gesteuerten oder ungesteuerten Gleichrichter mit dem Netz und andererseits über eine Diode mit einem elektrischen Energiespeicher verbunden. Bei früheren Systemen mit selbst kommutierenden Gleichstrommotoren war es hingegen möglich, den EFC-Betrieb durch eine direkte Batteriefahrt zu realisieren.

Um bei der zyklischen Prüfung der Sicherheitsfunktion den schlechtesten Fall abzudecken, muss ein Netzausfall simuliert werden, sodass das Pitch-System aus dem elektrischen Energiespeicher versorgt wird. So wird sichergestellt, dass das Pitch-System unter Verwendung aller Schaltungen, Bauteile und Komponenten betrieben wird, die zur sicheren Stillsetzung notwendig sind. Wie zuvor bereits erwähnt, wird die Sicherheitsfunktion überprüft, indem testweise eine EFC-Anforderung durch die übergeordnete Betriebssteuerungseinrichtung ausgelöst wird. Dies hat zur Folge, dass die gesamte Windkraftanlage für diesen Test gestoppt wird.

Für die Dauer des Tests und darüber hinaus bis zum Wiedererreichen des Betriebszustands kann die Windkraftanlage keine oder nur wesentlich weniger Energie erzeugen. Die technische Anlagenverfügbarkeit ist damit um diese Zeit reduziert, was sich direkt auf die finanzielle Amortisierung auswirkt. Die gerechnete Verfügbarkeit einer Windkraftanlage ist innerhalb eines im Vorfeld vereinbarten Zeitrahmens zu sehen. Zu unterscheiden ist dabei zwischen einer geplanten und einer ungeplanten Auszeit. Die geplanten Auszeiten werden kaufmännisch von der Gesamtzeit vorweg abgezogen. Als weiter Nachteil treten während der Notabschaltung eine erhöhte Belastung und ein erhöhter Stress für die Windkraftanlage auf. Da diese zyklische Mehrbelastung zu vermehrtem Verschleiß führt, ist davon auszugehen, dass ebenfalls erhöhte Kosten und Aufwände bei Wartung, Service und Instandhaltung auftreten.

Die DE 10 2008 025 944 A1 offenbart eine Windenergieanlage mit einem Rotor, einem davon angetriebenen Generator zur Erzeugung elektrischer Energie, wobei der Rotor mindestens ein mittels einer Pitcheinrichtung verstellbares Blatt aufweist, und die Pitcheinrichtung eine Energieversorgungseinheit mit einer Batterie und einem Stellantrieb und weiter eine Kontrolleinheit umfasst. Es ist ein Belastungsmodul vorgesehen, welches den Stellantrieb zwischen einem Betriebsmodus und einem Prüfmodus umschaltet, wobei im Prüfmodus der Stellantrieb eine vorwählbare definierte Last für die Batterie bildet. Der Stellantrieb umfasst einen Umrichter und einen Gleichstrommotor, wobei das Belastungssteuermodul derart ausgebildet ist, den Gleichstrommotor mit einem vorgebbaren Strom zu beaufschlagen, welcher der definierten Belastung entspricht. Ferner ist ein Entladesteuermodul vorgesehen, welches die an dem Stellantrieb wirkende Spannung zu Testbeginn auf ein vorbestimmtes Spannungsniveau absenkt. Dazu wird insbesondere der Zwischenkreis auf das Batteriespannungsniveau entladen. Auch ist ein Batteriewächter vorgesehen, welcher die Batterie insbesondere hinsichtlich ihres Spannungszustands überwacht.

Das Belastungsmodul schaltet den Stellantrieb zwischen einem Betriebsmodus und einem Prüfmodus um, sodass der Stellantrieb im Prüfmodus nicht im Normalbetrieb arbeiten kann. Ein weiteres Beispiel ist aus EP2578876 A1 bekannt.

Ausgehend hiervon liegt der Erfindung die Aufgabe zugrunde, eine Möglichkeit zur Überprüfung der Funktionsfähigkeit von zur Notabschaltung einer Windkraftanlage einsetzbarerer Komponenten im Normalbetrieb zu schaffen.

Diese Aufgabe wird erfindungsgemäß durch eine Windkraftanlage nach Anspruch 1 und durch ein Verfahren nach Anspruch 10 gelöst. Bevorzugte Weiterbildungen der Erfindung sind in den Unteransprüchen und in der nachfolgenden Beschreibung gegeben.

Die eingangs genannte Windkraftanlage mit einem durch Windkraft drehbaren Rotor, der eine Rotornabe und wenigstens ein an dieser drehbar gelagertes Rotorblatt aufweist, einer übergeordneten Betriebssteuereinrichtung und einem mit dieser in Kommunikationsverbindung stehenden und zur Notabschaltung der Windkraftanlage einsetzbare Komponenten aufweisenden Blattwinkelverstellsystem, mittels welchem das Rotorblatt relativ zu der Rotornabe drehbar und somit in unterschiedliche Blattwinkelstellungen positionierbar ist, wobei Steuerbefehle zum Positionieren des Rotorblatts von der Betriebssteuereinrichtung an das Blattwinkelverstellsystem abgebbar sind und wobei das Blattwinkelverstellsystem in einem Normalbetrieb der Windkraftanlage den Steuerbefehlen folgt und das Rotorblatt entsprechend positioniert, wird erfindungsgemäß dadurch weitergebildet, dass das Blattwinkelverstellsystem zusätzlich eine parallel zum Normalbetrieb lauffähige Überwachungseinheit aufweist, mittels welcher die Funktionsfähigkeit der oder eines Teils der Komponenten überprüfbar ist.

Da die Überwachungseinheit parallel zum Normalbetrieb lauffähig ist, ist mittels der Überwachungseinheit im und/oder parallel zum Normalbetrieb die Funktionsfähigkeit der oder eines Teils der Komponenten überprüfbar. Beispielsweise dreht im Normalbetrieb das Rotorblatt relativ zur Rotornabe und/oder das Rotorblatt wird relativ zur Rotornabe gedreht, insbesondere mittels des Blattwinkelverstellsystems.

Bevorzugt ist von oder mittels der Überwachungseinheit, insbesondere im und/oder parallel zum Normalbetrieb, eine Information über das Ergebnis der Überprüfung an die Betriebssteuereinrichtung abgebbar.

Das Blattwinkelverstellsystem ist vorzugsweise am oder innerhalb des Rotors vorgesehen und/oder befestigt. Bevorzugt ist die Betriebssteuereinrichtung außerhalb des Rotors vorgesehen. Insbesondere weist die Windkraftanlage einen Maschinenträger auf, an welchem der Rotor drehbar gelagert ist. Die Betriebssteuereinrichtung ist bevorzugt an dem Maschinenträger vorgesehen und/oder befestigt. Vorzugsweise ist das Blattwinkelverstellsystem zusammen mit dem Rotor relativ zu der Betriebssteuereinrichtung drehbar. Vorteilhaft dreht sich im Normalbetrieb der Rotor relativ zum Maschinenträger und/oder der Rotor wird vorteilhaft im Normalbetrieb, insbesondere durch Windkraft, relativ zu dem Maschinenträger gedreht. Bevorzugt dreht sich im Normalbetrieb das Blattwinkelverstellsystem zusammen mit dem Rotor relativ zu der Betriebssteuereinrichtung. Bevorzugt ist die Betriebssteuereinrichtung mit dem Blattwinkelverstellsystem verbundenen, insbesondere durch eine oder mehrere Kommunikationsleitungen. Die Kommunikationsleitungen umfassen beispielweise Drehübertrager oder Schleifringe. Die Windkraftanlage umfasst bevorzugt einen elektrischen Generator, der mechanisch mit dem Rotor verbunden. Der Generator ist bevorzugt am Maschinenträger vorgesehen und/oder befestigt. Insbesondere ist der elektrische Generator mittels des Rotors antreibbar oder wird von diesem angetrieben.

Gemäß einer Weiterbildung ist bei Erfassen eines Fehlers in der Funktionsfähigkeit wenigstens einer der Komponenten durch die Überwachungseinheit das Blattwinkelverstellsystem von der Betriebssteuereinrichtung zum Drehen des Rotorblatts in eine sichere Blattwinkelstellung ansteuerbar. Dies ist sinnvoll, da bei Vorliegen eines Fehlers das Erreichen der sicheren Blattwinkelstellung im Notfall nicht mehr sichergestellt ist. In der sicheren Blattwinkelstellung ist das Rotorblatt vorzugsweise in Windrichtung und/oder parallel zur Windrichtung ausgerichtet. Die sichere Blattwinkelstellung wird z.B. auch als Fahnenstellung bezeichnet.

Gemäß einer Weiterbildung ist die Betriebssteuereinrichtung mit dem Blattwinkelverstellsystem durch eine oder wenigstens eine Notabschaltungs-Steuerleitung verbunden, über welche ein oder wenigstens ein Notabschaltungs-Steuersignal von der Betriebssteuereinrichtung an das Blattwinkelverstellsystem abgebbar ist. Die Komponenten umfassen bevorzugt die Notabschaltungs-Steuerleitung. Ferner umfasst das Blattwinkelverstellsystem insbesondere einen Notabschaltungs-Steuersignal-Eingang, dem das Notabschaltungs-Steuersignal zuführbar ist. Vorzugsweise ist die Notabschaltungs-Steuerleitung an den Notabschaltungs-Steuersignal-Eingang angeschlossen. Die Komponenten umfassen bevorzugt auch den Notabschaltungs-Steuersignal-Eingang. Insbesondere ist zur Überprüfung der Funktionsfähigkeit der Notabschaltungs-Steuerleitung und/oder des Notabschaltungs-Steuersignal-Eingangs im Normalbetrieb das Notabschaltungs-Steuersignal mittels der Überwachungseinheit auf einen Fehler hin überprüfbar. Das Notabschaltungs-Steuersignal kann ein Gleichstrom- oder Gleichspannungssignal sein. Beispielsweise weist das Notabschaltungs-Steuersignal im Normalbetrieb einen ersten Pegel, auf und wechselt zu einem zweiten Pegel, wenn eine Notabschaltung der Windkraftanlage erfolgen soll. Der erste Pegel ist z.B. ein H-Pegel oder ein L-Pegel. Ferner ist der zweite Pegel z.B. ein L-Pegel oder ein H-Pegel. Hierbei besteht jedoch die Gefahr, dass das Notabschaltungs-Steuersignal aufgrund einer Funktionsbeeinträchtigung dauerhaft im ersten Pegel verbleibt und nicht mehr zum zweiten Pegel wechseln kann. Bevorzugt ist das Notabschaltungs-Steuersignal ein periodisches und/oder gepulstes Signal mit definierter Frequenz. Vorteilhaft umfasst das Blattwinkelverstellsystem und/oder die Überwachungseinheit und/oder der Notabschaltungs-Steuersignal-Eingang eine Frequenz-Erfassungseinrichtung, mittels welcher die Frequenz des Notabschaltungs-Steuersignals erfassbar ist. Bevorzugt ist die Überwachungseinheit mit dem Notabschaltungs-Steuersignal-Eingang und/oder der Frequenz-Erfassungseinrichtung verbunden. Insbesondere ist mittels der Überwachungseinheit die Frequenz des Notabschaltungs-Steuersignals erfassbar. Vorzugsweise ist zur Überprüfung der Funktionsfähigkeit der Notabschaltungs-Steuerleitung und/oder des Notabschaltungs-Steuersignal-Eingangs im Normalbetrieb mittels der Überwachungseinheit die Frequenz oder wenigstens die Frequenz des Notabschaltungs-Steuersignals, insbesondere mittels der Überwachungseinheit, überprüfbar. Ein Fehler im Notabschaltungs-Steuersignal liegt insbesondere dann vor, wenn dieses ausbleibt oder dessen Frequenz von der definierten Frequenz über ein vorgegebenes Maß hinaus abweicht. Durch einen Fehler im Notabschaltungs-Steuersignal kann z.B. ein Fehler in der Notabschaltungs-Steuerleitung und/oder im Notabschaltungs-Steuersignal-Eingang erkannt werden. Somit kann auch die oben genannte Funktionsbeeinträchtigung erkannt werden. Die Notabschaltungs-Steuerleitung umfasst beispielweise wenigstens einen Drehübertrager oder Schleifring oder ist über wenigstens einen Drehübertrager oder Schleifring geführt.

Gemäß einer Ausgestaltung umfasst das Blattwinkelverstellsystem einen oder wenigstens einen Umrichter und einen oder wenigstens einen dem Umrichter nachgeschalteten und mechanisch mit dem Rotorblatt verbundenen Elektromotor. Bevorzugt umfasst das Blattwinkelverstellsystem ferner eine oder wenigstens eine Drehwinkelgebereinrichtung, mittels welcher die Blattwinkelstellung des Rotorblatts erfassbar ist. Bevorzugt ist die Überwachungseinheit mit der Drehwinkelgebereinrichtung verbunden. Insbesondere ist mittels der Überwachungseinheit die Blattwinkelstellung des Rotorblatts erfassbar. Der Elektromotor ist insbesondere elektrisch mit dem Umrichter verbunden, vorzugsweise über elektrische Motoranschlussleitungen. Bevorzugt umfassen die Komponenten den Umrichter und/oder den Elektromotor und/oder die zwischen dem Elektromotor und dem Rotorblatt vorgesehene mechanische Verbindung und/oder die Motoranschlussleitungen. Insbesondere ist zur Überprüfung der Funktionsfähigkeit dieser Komponenten im Normalbetrieb mittels der Überwachungseinheit die Blattwinkelstellung des Rotorblatts auf eine Änderung hin überprüfbar. Wenn sich im Normalbetrieb die Blattwinkelstellung des Rotorblatts ändert, ist davon auszugehen, dass der Umrichter und/oder der Elektromotor und/oder die zwischen dem Elektromotor und dem Rotorblatt vorgesehene mechanische Verbindung und/oder die Motoranschlussleitungen funktionsfähig sind. Das Blattwinkelverstellsystem umfasst bevorzugt ferner eine Steuereinheit, mittels welcher insbesondere der Umrichter steuerbar ist. Vorteilhaft ist die Steuereinheit mit dem Umrichter verbunden. Vorzugsweise umfassen die vorgenannten Komponenten zusätzlich zu dem Umrichter und/oder dem Elektromotor und/oder der zwischen dem Elektromotor und dem Rotorblatt vorgesehenen mechanischen Verbindung und/oder den Motoranschlussleitungen auch die Steuereinheit. Insbesondere ist die Überwachungseinheit mit der Steuereinheit verbunden. Bevorzugt ist die Steuereinheit mittels der Überwachungseinheit steuerbar. Vorzugsweise ist die Überwachungseinheit mit dem Umrichter verbunden. Insbesondere ist der Umrichter mittels der Überwachungseinheit steuerbar, beispielsweise direkt oder unter Zwischenschaltung der Steuereinheit. Bevorzugt umfasst die Steuereinheit die Überwachungseinheit oder einen Teil der Überwachungseinheit. Die Drehwinkelgebereinrichtung umfasst vorteilhaft einen oder wenigstens einen Drehwinkelgeber, mittels welchen die Blattwinkelstellung des Rotorblatts erfassbar ist. Mittels des Drehwinkelgebers ist z.B. die Drehwinkelstellung einer Motorwelle des Elektromotors und/oder die Drehwinkelstellung oder Blattwinkelstellung des Rotorblatts erfassbar.

Der Elektromotor ist bevorzugt ein Asynchronmotor, ein Servomotor, ein Gleichstrommotor oder ein Synchronmotor, beispielsweise ein Permanentmagnet-Synchronmotor. Insbesondere umfasst der Elektromotor die oder eine Motorwelle, die vorzugsweise mechanisch, insbesondere unter Zwischenschaltung eines oder wenigstens eines Getriebes, mit dem Rotorblatt verbunden ist. Das Rotorblatt ist bevorzugt mittels eines Blattlagers drehbar an der Rotornabe gelagert. Die zwischen dem Elektromotor und dem Rotorblatt vorgesehene mechanische Verbindung umfasst z.B. die Motorwelle und/oder eine oder mehrere Wellen des Getriebes und/oder das Getriebe und/oder das Blattlager. In die Motoranschlussleitungen können z.B. ein oder mehrere stromunterbrechende Elemente geschaltet sein, wie z.B. Schütze oder Relais. Das Getriebe umfasst z.B. ein Ritzel und einen Zahnkranz, mit welchem das Ritzel kämmt und/oder ineinandergreift. Das Ritzel ist bevorzugt drehstarr mit der Motorwelle verbunden. Der Zahnkranz ist bevorzugt drehstarr mit dem Rotorblatt oder mit der Rotornabe verbunden.

Gemäß einer Weiterbildung umfasst die Drehwinkelgebereinrichtung zwei oder wenigstens zwei Drehwinkelgeber, mittels welchen unabhängig voneinander die Blattwinkelstellung des Rotorblatts erfassbar ist. Insbesondere ist die Überwachungseinheit mit jedem der Drehwinkelgeber verbunden. Vorteilhaft ist mittels der Überwachungseinheit die von jedem der Drehwinkelgeber erfasste Blattwinkelstellung des Rotorblatts erfassbar. Die Komponenten umfassen bevorzugt die Drehwinkelgebereinrichtung. Insbesondere sind zur Überprüfung der Funktionsfähigkeit der Drehwinkelgebereinrichtung im Normabetrieb mittels der Überwachungseinheit die von den unterschiedlichen Drehwinkelgebern erfassten Drehwinkelstellungen und/oder Blattwinkelstellungen miteinander vergleichbar und/oder auf Plausibilität hin überprüfbar. Ein Fehler in der Drehwinkelgebereinrichtung liegt insbesondere dann vor, wenn die von den unterschiedlichen Drehwinkelgebern erfassten Blattwinkelstellungen über ein vorgegebenes Maß hinaus voneinander abweichen. Mittels eines ersten der Drehwinkelgeber ist z.B. die Drehwinkelstellung der Motorwelle erfassbar und mittels eines zweiten der Drehwinkelgeber ist z.B. die Drehwinkelstellung oder Blattwinkelstellung des Rotorblatts erfassbar.

Bevorzugt umfasst das Blattwinkelverstellsystem einen oder wenigstens einen durch das Rotorblatt bei Erreichen der sicheren Blattwinkelstellung betätigbaren Endschalter, durch dessen Betätigung der Elektromotor abschaltbar ist. Vorteilhaft ist der Endschalter durch die Drehwinkelgebereinrichtung gebildet. Ein solcher Endschalter kann z.B. auch als Software-Endschalter bezeichnet werden. Durch die Überprüfung der Funktionsfähigkeit der Drehwinkelgebereinrichtung ist somit insbesondere auch der Endschalter mittels der Überwachungseinheit auf Funktionsfähigkeit hin überprüfbar. Der vorgenannte Endschalter wird bevorzugt auch als erster Endschalter bezeichnet. Vorzugsweise umfasst das Blattwinkelverstellsystem einen oder wenigstens einen durch das Rotorblatt bei Erreichen der sicheren Blattwinkelstellung oder einer gegenüber dieser versetzten Blattwinkelstellung betätigbaren zweiten Endschalter, durch dessen Betätigung der Elektromotor abschaltbar ist. Bevorzugt ist der zweite Endschalter mechanisch durch das Rotorblatt betätigbar. Der zweite Endschalter dient insbesondere zur Sicherheit, falls im ersten Endschalter ein Fehler vorliegt.

Gemäß einer Ausgestaltung umfasst das Blattwinkelverstellsystem einen oder wenigstens einen elektrischen Energiespeicher. Bevorzugt umfasst der Umrichter eine Eingangsstufe, einen der Eingangsstufe nachgeschalteten Zwischenkreis und eine dem Zwischenkreis nachgeschaltete Ausgangsstufe. Insbesondere ist der elektrische Energiespeicher an den Zwischenkreis angeschlossen. Vorteilhaft ist die Eingangsstufe an eine elektrische Stromversorgung angeschlossen und/oder dieser nachgeschaltet. Insbesondere ist die Eingangsstufe und/oder der Umrichter durch die elektrische Stromversorgung mit elektrischer Energie versorgbar. Die elektrische Stromversorgung ist z.B. durch ein elektrisches Netz gebildet, beispielsweise durch ein Windkraftanlagennetz, durch ein Windparknetz oder durch das öffentliche Stromversorgungsnetz. Insbesondere ist die elektrische Stromversorgung mehrphasig, beispielsweise dreiphasig. Vorteilhaft ist die Überwachungseinheit mit der Eingangsstufe verbunden. Bevorzugt ist die Eingangsstufe mittels der Überwachungseinheit steuerbar, beispielsweise direkt oder unter Zwischenschaltung der Steuereinheit. Vorzugsweise ist der Elektromotor an die Ausgangsstufe angeschlossen und/oder dieser nachgeschaltet. Vorteilhaft ist die Überwachungseinheit mit der Ausgangsstufe verbunden. Bevorzugt ist die Ausgangsstufe mittels der Überwachungseinheit steuerbar, beispielsweise direkt oder unter Zwischenschaltung der Steuereinheit. Vorzugsweise umfasst das Blattwinkelverstellsystem und/oder der Umrichter eine Zwischenkreisspannungs-Erfassungseinrichtung, mittels welcher eine an dem Zwischenkreis anliegende elektrische Zwischenkreisspannung erfassbar ist. Insbesondere ist die Überwachungseinheit mit der Zwischenkreisspannungs-Erfassungseinrichtung verbunden. Bevorzugt ist mittels der Überwachungseinheit die Zwischenkreisspannung erfassbar. Vorteilhaft umfassen die Komponenten den Energiespeicher. Insbesondere ist zur Überprüfung der Funktionsfähigkeit des Energiespeichers im Normalbetrieb mittels der Überwachungseinheit die Eingangsstufe zum Herabsetzen der Zwischenkreisspannung von einer Zwischenkreis-Nennspannung auf eine unter dieser liegende, insbesondere vorgegebene, Prüfspannung ansteuerbar, die unter einer dem Energiespeicher zugeordneten, insbesondere vorgegebenen, Mindestspannung liegt, und die Zwischenkreisspannung mit der Mindestspannung vergleichbar. Da die Prüfspannung unter der Mindestspannung des Energiespeichers liegt, wird der Zwischenkreis von dem Energiespeicher mit Spannung versorgt, sofern der Energiespeicher an den Zwischenkreis angeschlossen und funktionsfähig ist. Ist die erfasste Zwischenkreisspannung größer oder gleich der Mindestspannung des Energiespeichers, ist der Energiespeicher vorhanden und funktionsfähig. Ferner ist die elektrische Verbindung zwischen dem Energiespeicher und dem Zwischenkreis funktionsfähig. Ist die erfasste Zwischenkreisspannung hingegen gleich der Prüfspannung oder kleiner als die Mindestspannung des Energiespeichers, ist der Energiespeicher nicht funktionsfähig und/oder die elektrische Verbindung zwischen dem Energiespeicher und dem Zwischenkreis ist nicht funktionsfähig. Die Komponenten umfassen somit bevorzugt auch die elektrische Verbindung zwischen dem Energiespeicher und dem Zwischenkreis.

Die Eingangsstufe ist insbesondere eine gleichrichtende Eingangsstufe oder ein Gleichrichter, vorzugsweise ein steuerbarer Gleichrichter. Der Zwischenkreis ist bevorzugt ein Gleichspannungszwischenkreis und/oder Gleichstromzwischenkreis. Insbesondere umfasst der Zwischenkreis einen Zwischenkreiskondensator. Die Ausgangsstufe ist bevorzugt eine Transistorausgangsstufe. Beispielsweise bildet die Ausgangsstufe einen Wechselrichter und/oder einen Pulsweitenmodulator.

Der elektrische Energiespeicher ist insbesondere über ein oder wenigstens ein gleichrichtendes Bauelement, wie z.B. eine oder wenigstens eine Diode, an den Zwischenkreis angeschlossen. Bevorzugt umfasst die elektrische Verbindung zwischen dem Energiespeicher und dem Zwischenkreis das oder das wenigstens eine gleichrichtende Bauelement. Vorteilhaft umfasst der Energiespeicher wenigstens eine, insbesondere wiederaufladbare, Batterie und/oder wenigstens einen Kondensator. Die wiederaufladbare Batterie wird z.B. auch als Akkumulator bezeichnet.

Die Prüfspannung ist vorzugsweise ungleich Null. Vorteilhaft ist die Prüfspannung größer Null. Bevorzugt ist die Prüfspannung derart hoch, dass der Umrichter und/oder der Elektromotor auch bei an dem Zwischenkreis anliegender Prüfspannung betreibbar sind. Der Umrichter und/oder der Elektromotor sind somit insbesondere mit Prüfspannung betreibbar. Damit ist der Vorteil verbunden, dass bei der Überprüfung der Funktionsfähigkeit des Energiespeichers der Normalbetrieb aufrechterhalten werden kann, insbesondere auch dann, wenn der Energiespeicher und/oder die elektrische Verbindung zwischen dem Energiespeicher und dem Zwischenkreis nicht funktionsfähig sind. Liegt die Zwischenkreisspannung unter der Mindestspannung des Energiespeichers und/oder entspricht die Zwischenkreisspannung der Prüfspannung, wird bevorzugt mittels der Überwachungseinheit ein Fehler an die Betriebssteuereinrichtung gemeldet und/oder das Ansteuern der Eingangsstufe zum Herabsetzen der Zwischenkreisspannung beendet, die daraufhin insbesondere wieder ihre Nennspannung annimmt.

Gemäß einer Weiterbildung umfasst das Blattwinkelverstellsystem eine Energiespeicherstrom-Erfassungseinrichtung, mittels welcher ein von dem Energiespeicher abgegebener elektrischer Energiespeicherstrom erfassbar ist. Bevorzugt ist die Überwachungseinheit mit der Energiespeicherstrom-Erfassungseinrichtung verbunden. Vorteilhaft ist mittels der Überwachungseinheit der Energiespeicherstrom erfassbar. Vorzugsweise ist die Überwachungseinheit mit dem Elektromotor verbunden. Vorteilhaft ist der Elektromotor mittels der Überwachungseinheit steuerbar, beispielsweise direkt oder unter Zwischenschaltung der Steuereinheit und/oder des Umrichters und/oder der Ausgangsstufe. Insbesondere ist zur ergänzenden Überprüfung der Funktionsfähigkeit des Energiespeichers im Normalbetrieb mittels der Überwachungseinheit
- die Ausgangsstufe derart ansteuerbar, dass der Energiespeicher über den Umrichter mit dem Elektromotor, vorzugsweise ohne oder ohne wesentliche Änderung der von diesem, insbesondere im Normalbetrieb und/oder aktuell, abgegebenen mechanischen Leistung, elektrisch belastbar ist, während die Eingangsstufe von der Überwachungseinheit zum Herabsetzen der Zwischenkreisspannung auf die Prüfspannung angesteuert ist,
- die Entladung des Energiespeichers, insbesondere auf Basis der Zwischenkreisspannung und/oder des Energiespeicherstroms, beobachtbar,
- aus der Beobachtung der Entladung wenigstens eine den aktuellen Zustand des elektrischen Energiespeichers charakterisierende Information bildbar und
- die Information und/oder der aktuelle Zustand des Energiespeichers mit vorgegebenen Anforderungen an den Zustand des Energiespeichers und/oder mit einem vorgegebenen Soll-Zustand des Energiespeichers vergleichbar.
Hierdurch kann der Zustand des Energiespeichers überprüft werden. Bevorzugt umfasst der aktuelle Zustand des elektrischen Energiespeichers und/oder die den aktuellen Zustand des elektrischen Energiespeichers charakterisierende Information den SoC-Zustand (Ladezustand) des Energiespeichers (engl.: SoC = State of Charge) und/oder den SoH-Zustand des Energiespeichers (engl.: SoH = State of Health). Insbesondere umfassen die vorgegebenen Anforderungen an den Zustand des elektrischen Energiespeichers und/oder der vorgegebene Soll-Zustand des Energiespeichers einen vorgegebenen Soll-SoC-Zustand des Energiespeichers und/oder einen vorgegebenen Soll-SoH-Zustand des Energiespeichers. Entspricht der aktuelle Zustand des Energiespeichers nicht den vorgegebenen Anforderungen oder dem Soll-Zustand und/oder weicht der aktuelle Zustand des Energiespeichers von den vorgegebenen Anforderungen oder dem Soll-Zustand über ein vorgegebenes Maß hinaus ab, wird bevorzugt mittels der Überwachungseinheit ein Fehler an die Betriebssteuereinrichtung gemeldet.

Gemäß einer Ausgestaltung sind eine oder mehrere an dem Elektromotor anliegende elektrische Motorspannungen mittels der Überwachungseinheit, insbesondere unter Zwischenschaltung der Steuereinheit und/oder der Ausgangsstufe, derart modulierbar, dass eine definierte elektrische Belastung des Energiespeichers, vorzugsweise ohne oder ohne wesentliche Änderung der von dem Elektromotor, insbesondere im Normalbetrieb und/oder aktuell, abgegebenen mechanischen Leistung und/oder des von dem Elektromotor abgegebenen Drehmoments und/oder der Drehzahl des Elektromotors, erzielbar ist. Der Ausdruck "ohne oder ohne wesentliche Änderung der von dem Elektromotor abgegebenen mechanischen Leistung" bedeutet somit insbesondere ohne oder ohne wesentliche Änderung des von dem Elektromotor abgegebenen Drehmoments und/oder der Drehzahl des Elektromotors. Ein oder mehrere zum Hervorrufen der definierten elektrischen Belastung des Energiespeichers dem Elektromotor zuführbare Motorströme sind durch die Modulation der Motorspannungen insbesondere in den Elektromotor einprägbar. Die Energiespeicherstrom-Erfassungseinrichtung ist bevorzugt eine Zwischenkreisstrom-Erfassungseinrichtung, mittels welcher der im Zwischenkreis fließende Strom (Zwischenkreisstrom) erfassbar ist. Alternativ ist die Energiespeicherstrom-Erfassungseinrichtung z.B. eine Motorstrom-Erfassungseinrichtung, mittels welcher der oder die dem Elektromotor zugeführten und/oder in diesen eingeprägten Motorströme erfassbar sind.

Gemäß einer Weiterbildung umfasst das Blattwinkelverstellsystem wenigstens eine elektrisch betätigbare Bremse, mittels welcher das Rotorblatt bezüglich einer Drehung relativ zu der Rotornabe festsetzbar und/oder bremsbar ist. Bevorzugt umfasst das Blattwinkelverstellsystem ferner eine Bremsensteuereinrichtung, mittels welcher die Bremse steuerbar ist. Die Bremsensteuereinrichtung ist vorzugsweise mittels der Steuereinheit steuerbar. Gemäß einer Ausgestaltung ist die Bremsensteuereinrichtung in die Steuereinheit integriert. Bevorzugt ist die Bremse mittels der Steuereinheit, insbesondere unter Zwischenhaltung der Bremsensteuereinrichtung, steuerbar. Bevorzugt ist die Bremse mit der Bremsensteuereinrichtung und/oder mit der Steuereinheit über elektrische Bremsenanschlussleitungen verbunden. Die Komponenten umfassen vorzugsweise die Bremse und/oder die Bremsensteuereinrichtung und/oder die Bremsenanschlussleitungen. Bevorzugt umfasst das Blattwinkelverstellsystem eine Bremsenstrom-Erfassungseinrichtung, mittels welcher ein der Bremse zugeführter elektrischer Bremsenstrom erfassbar ist. Vorzugsweise ist die Überwachungseinheit mit der Bremsenstrom-Erfassungseinrichtung verbunden. Insbesondere ist mittels der Überwachungseinheit der Bremsenstrom erfassbar. Vorteilhaft ist zur Überprüfung der Funktionsfähigkeit der Bremse und/oder der Bremsensteuereinrichtung und/oder der Bremsenanschlussleitungen im Normalbetrieb mittels der Überwachungseinheit der oder ein der Bremse zugeführter elektrischer Bremsenstrom und/oder ein zeitlicher Verlauf des Bremsenstroms auf Plausibilität hin überprüfbar. Ist der Bremsenstrom und/oder der Verlauf des Bremsenstroms nicht plausibel, liegt insbesondere ein Fehler in der Bremse und/oder in der Bremsensteuereinrichtung und/oder in den Bremsenanschlussleitungen vor. Bevorzugt ist im durch die Bremse festgesetzten Zustand des Rotorblatts zur Überprüfung der Funktionsfähigkeit der Bremse und/oder der Bremsensteuereinrichtung und/oder der Bremsenanschlussleitungen im Normalbetrieb mittels der Überwachungseinheit, insbesondere mittels der Drehwinkelgebereinrichtung, die Blattwinkelstellung des Rotorblatts auf eine auf eine Änderung hin überprüfbar. Wird im durch die Bremse festgesetzten Zustand des Rotorblatts eine Änderung der Blattwinkelstellung des Rotorblatts erfasst, liegt insbesondere ein Fehler in der Bremse und/oder in der Bremsensteuereinrichtung und/oder in den Bremsenanschlussleitungen vor. Die Bremsenanschlussleitungen umfassen z.B. ein oder mehrere stromunterbrechenden Elemente, wie z.B. Schütze oder Relais. Die Bremse ist bevorzugt eine elektro-mechanische Bremse. Insbesondere ist die Bremse eine Haltebremse. Liegt ein Fehler in der Bremse und/oder in der Bremsensteuereinrichtung und/oder in den Bremsenanschlussleitungen vor, wird bevorzugt mittels der Überwachungseinheit ein Fehler an die Betriebssteuereinrichtung gemeldet.

Die Erfindung betrifft ferner ein Verfahren zum Überprüfen der Funktionsfähigkeit von zur Notabschaltung einer Windkraftanlage einsetzbarerer Komponenten, die einen durch Windkraft drehbaren oder drehenden Rotor, der eine Rotornabe und wenigstens ein an dieser drehbar gelagertes Rotorblatt aufweist, eine übergeordnete Betriebssteuereinrichtung und ein mit dieser in Kommunikationsverbindung stehendes und die Komponenten aufweisendes Blattwinkelverstellsystem umfasst, mittels welchem das Rotorblatt relativ zu der Rotornabe drehbar ist oder gedreht wird und somit in unterschiedliche Blattwinkelstellungen positionierbar ist oder positioniert wird, wobei Steuerbefehle zum Positionieren des Rotorblatts von der Betriebssteuereinrichtung an das Blattwinkelverstellsystem abgegeben werden, wobei das Blattwinkelverstellsystem in einem Normalbetrieb der Windkraftanlage den Steuerbefehlen folgt und das Rotorblatt entsprechend positioniert, und wobei das Blattwinkelverstellsystem zusätzlich eine parallel zum Normalbetrieb laufende Überwachungseinheit aufweist, mittels welcher die Funktionsfähigkeit der oder eines Teils der Komponenten überprüft wird.

Bei der im Zusammenhang mit dem Verfahren genannten Windkraftanlage handelt es sich bevorzugt um die erfindungsgemäße Windkraftanlage. Das Verfahren kann gemäß allen im Zusammenhang mit der erfindungsgemäßen Windkraftanlage erläuterten Ausgestaltungen weitergebildet werden. Ferner kann die erfindungsgemäße Windkraftanlage gemäß allen im Zusammenhang mit dem Verfahren erläuterten Ausgestaltungen weitergebildet sein. Das Verfahren wird bevorzugt in oder mittels der erfindungsgemäßen Windkraftanlage durchgeführt. Insbesondere wird die erfindungsgemäße Windkraftanlage zur Durchführung des Verfahrens verwendet.

Da gemäß dem Verfahren die Überwachungseinheit parallel zum Normalbetrieb läuft, wird mittels der Überwachungseinheit insbesondere im und/oder parallel zum Normalbetrieb die Funktionsfähigkeit der oder eines Teils der Komponenten überprüft. Bevorzugt wird von oder mittels der Überwachungseinheit, insbesondere im und/oder parallel zum Normalbetrieb, eine Information über das Ergebnis der Überprüfung an die Betriebssteuereinrichtung abgegeben. Beispielsweise dreht im Normalbetrieb das Rotorblatt relativ zur Rotornabe und/oder das Rotorblatt wird relativ zur Rotornabe gedreht, insbesondere mittels des Blattwinkelverstellsystems.

Gemäß einer Ausgestaltung wird bei Erfassen eines Fehlers in der Funktionsfähigkeit wenigstens einer der Komponenten durch die Überwachungseinheit das Blattwinkelverstellsystem von der Betriebssteuereinrichtung zum Drehen des Rotorblatts in die oder eine sichere Blattwinkelstellung angesteuert.

Gemäß einer Weiterbildung ist die Betriebssteuereinrichtung mit dem Blattwinkelverstellsystem durch eine oder wenigstens eine Notabschaltungs-Steuerleitung verbunden, über welche ein oder wenigstens ein Notabschaltungs-Steuersignal von der Betriebssteuereinrichtung an das Blattwinkelverstellsystem abgegeben wird. Die Komponenten umfassen bevorzugt die Notabschaltungs-Steuerleitung. Ferner umfasst das Blattwinkelverstellsystem insbesondere einen Notabschaltungs-Steuersignal-Eingang, dem das Notabschaltungs-Steuersignal zugeführt wird. Vorzugsweise ist die Notabschaltungs-Steuerleitung an den Notabschaltungs-Steuersignal-Eingang angeschlossen. Die Komponenten umfassen bevorzugt auch den Notabschaltungs-Steuersignal-Eingang. Insbesondere wird zur Überprüfung der Funktionsfähigkeit der Notabschaltungs-Steuerleitung und/oder des Notabschaltungs-Steuersignal-Eingangs im Normalbetrieb mittels der Überwachungseinheit das Notabschaltungs-Steuersignal auf einen Fehler hin überprüft. Bevorzugt ist das Notabschaltungs-Steuersignal ein periodisches Signal mit definierter Frequenz. Vorteilhaft umfasst das Blattwinkelverstellsystem und/oder die Überwachungseinheit und/oder der Notabschaltungs-Steuersignal-Eingang eine Frequenz-Erfassungseinrichtung, mittels welcher die Frequenz des Notabschaltungs-Steuersignals erfasst wird. Bevorzugt ist die Überwachungseinheit mit dem Notabschaltungs-Steuersignal-Eingang und/oder mit der Frequenz-Erfassungseinrichtung verbunden. Insbesondere wird mittels der Überwachungseinheit die Frequenz des Notabschaltungs-Steuersignals erfasst. Vorzugsweise wird zur Überprüfung der Funktionsfähigkeit der Notabschaltungs-Steuerleitung und/oder des Notabschaltungs-Steuersignal-Eingangs im Normalbetrieb mittels der Überwachungseinheit die Frequenz oder wenigstens die Frequenz des Notabschaltungs-Steuersignals, insbesondere mittels der Überwachungseinheit, überprüft. Ein Fehler in dem Notabschaltungs-Steuersignal liegt insbesondere dann vor, wenn dieses ausbleibt oder dessen Frequenz von der definierten Frequenz über ein vorgegebenes Maß hinaus abweicht.

Gemäß einer Ausgestaltung umfasst das Blattwinkelverstellsystem einen oder wenigstens einen Umrichter und einen oder wenigstens einen dem Umrichter nachgeschalteten und mechanisch mit dem Rotorblatt verbundenen Elektromotor. Bevorzugt umfasst das Blattwinkelverstellsystem ferner eine oder wenigstens eine Drehwinkelgebereinrichtung, mittels welcher die Blattwinkelstellung des Rotorblatts erfasst wird. Bevorzugt ist die Überwachungseinheit mit der Drehwinkelgebereinrichtung verbunden. Insbesondere wird mittels der Überwachungseinheit die Blattwinkelstellung des Rotorblatts erfasst. Der Elektromotor ist insbesondere elektrisch mit dem Umrichter verbunden, vorzugsweise über elektrische Motoranschlussleitungen. Die Komponenten umfassen bevorzugt den Umrichter und/oder den Elektromotor und/oder die zwischen dem Elektromotor und dem Rotorblatt vorgesehene mechanische Verbindung und/oder die Motoranschlussleitungen. Insbesondere wird zur Überprüfung der Funktionsfähigkeit dieser Komponenten im Normalbetrieb mittels der Überwachungseinheit die Blattwinkelstellung des Rotorblatts auf eine Änderung hin überprüft. Das Blattwinkelverstellsystem umfasst bevorzugt ferner eine Steuereinheit, mittels welcher insbesondere der Umrichter gesteuert wird. Vorzugsweise umfassen die vorgenannten Komponenten zusätzlich zu dem Umrichter und/oder dem Elektromotor und/oder der zwischen dem Elektromotor und dem Rotorblatt vorgesehenen mechanischen Verbindung und/oder den Motoranschlussleitungen auch die Steuereinheit. Insbesondere ist die Überwachungseinheit mit der Steuereinheit verbunden. Bevorzugt kann die Steuereinheit mittels der Überwachungseinheit gesteuert werden. Vorzugsweise ist die Überwachungseinheit mit dem Umrichter verbunden. Insbesondere kann der Umrichter mittels der Überwachungseinheit gesteuert werden, beispielsweise direkt oder unter Zwischenschaltung der Steuereinheit. Bevorzugt umfasst die Steuereinheit die Überwachungseinheit oder einen Teil der Überwachungseinheit. Die Drehwinkelgebereinrichtung umfasst vorteilhaft einen oder wenigstens einen Drehwinkelgeber, mittels welchen die Blattwinkelstellung des Rotorblatts erfasst wird. Der Drehwinkelgeber erfasst z.B. die Drehwinkelstellung einer Motorwelle des Elektromotors und/oder die Drehwinkelstellung oder Blattwinkelstellung des Rotorblatts.

Der Elektromotor ist bevorzugt ein Asynchronmotor, ein Servomotor, ein Gleichstrommotor oder ein Synchronmotor, beispielsweise ein Permanentmagnet-Synchronmotor. Insbesondere umfasst der Elektromotor die oder eine Motorwelle, die vorzugsweise mechanisch, insbesondere unter Zwischenschaltung eines oder wenigstens eines Getriebes, mit dem Rotorblatt verbunden ist. Das Rotorblatt ist bevorzugt mittels eines Blattlagers drehbar an der Rotornabe gelagert. Die zwischen dem Elektromotor und dem Rotorblatt vorgesehene mechanische Verbindung umfasst z.B. die Motorwelle und/oder eine oder mehrere Wellen des Getriebes und/oder das Getriebe und/oder das Blattlager. Die Motoranschlussleitungen umfassen z.B. ein oder mehrere stromunterbrechende Elemente, wie z.B. Schütze oder Relais. Das Getriebe umfasst z.B. ein Ritzel und einen Zahnkranz, mit welchem das Ritzel kämmt und/oder ineinandergreift. Das Ritzel ist bevorzugt drehstarr mit der Motorwelle verbunden. Der Zahnkranz ist bevorzugt drehstarr mit dem Rotorblatt oder mit der Rotornabe verbunden.

Gemäß einer Weiterbildung umfasst die Drehwinkelgebereinrichtung zwei oder wenigstens zwei Drehwinkelgeber, mittels welchen unabhängig voneinander die Blattwinkelstellung des Rotorblatts erfasst wird. Insbesondere ist die Überwachungseinheit mit jedem der Drehwinkelgeber verbunden. Vorteilhaft kann die Überwachungseinheit die von jedem der Drehwinkelgeber erfasste Blattwinkelstellung des Rotorblatts erfassen. Die Komponenten umfassen bevorzugt die Drehwinkelgebereinrichtung. Insbesondere werden zur Überprüfung der Funktionsfähigkeit der Drehwinkelgebereinrichtung im Normalbetrieb mittels der Überwachungseinheit die von den unterschiedlichen Drehwinkelgebern erfassten Drehwinkelstellungen und/oder Blattwinkelstellungen miteinander verglichen und/oder auf Plausibilität hin überprüft. Ein erster der Drehwinkelgeber erfasst z.B. die Drehwinkelstellung der Motorwelle und ein zweiter der Drehwinkelgeber erfasst z.B. die Drehwinkelstellung oder Blattwinkelstellung des Rotorblatts.

Bevorzugt umfasst das Blattwinkelverstellsystem einen oder wenigstens einen durch das Rotorblatt bei Erreichen der sicheren Blattwinkelstellung betätigbaren Endschalter, durch dessen Betätigung der Elektromotor abgeschaltet wird. Vorteilhaft ist der Endschalter durch die Drehwinkelgebereinrichtung gebildet. Durch die Überprüfung der Funktionsfähigkeit der Drehwinkelgebereinrichtung wird somit insbesondere auch der Endschalter auf Funktionsfähigkeit hin überprüft. Der vorgenannte Endschalter wird bevorzugt auch als erster Endschalter bezeichnet. Vorzugsweise umfasst das Blattwinkelverstellsystem einen oder wenigstens einen durch das Rotorblatt bei Erreichen der sicheren Blattwinkelstellung oder einer gegenüber dieser versetzten Blattwinkelstellung betätigbaren zweiten Endschalter, durch dessen Betätigung der Elektromotor abgeschaltet wird. Bevorzugt ist der zweite Endschalter mechanisch durch das Rotorblatt betätigbar.

Gemäß einer Ausgestaltung umfasst das Blattwinkelverstellsystem einen oder wenigstens einen elektrischen Energiespeicher. Bevorzugt umfasst der Umrichter eine Eingangsstufe, einen der Eingangsstufe nachgeschalteten Zwischenkreis und eine dem Zwischenkreis nachgeschaltete Ausgangsstufe. Insbesondere ist der elektrische Energiespeicher an den Zwischenkreis angeschlossen. Vorteilhaft ist die Eingangsstufe an eine elektrische Stromversorgung angeschlossen und/oder dieser nachgeschaltet. Insbesondere wird die Eingangsstufe und/oder der Umrichter durch die elektrische Stromversorgung mit elektrischer Energie versorgt. Die elektrische Stromversorgung ist z.B. durch ein elektrisches Netz gebildet, beispielsweise durch ein Windkraftanlagennetz, durch ein Windparknetz oder durch das öffentliche Stromversorgungsnetz. Insbesondere ist die elektrische Stromversorgung mehrphasig, beispielsweise dreiphasig. Vorteilhaft ist die Überwachungseinheit mit der Eingangsstufe verbunden. Bevorzugt kann die Eingangsstufe mittels der Überwachungseinheit gesteuert werden, beispielsweise direkt oder unter Zwischenschaltung der Steuereinheit. Vorzugsweise ist der Elektromotor an die Ausgangsstufe angeschlossen und/oder dieser nachgeschaltet. Vorteilhaft ist die Überwachungseinheit mit der Ausgangsstufe verbunden. Bevorzugt kann die Ausgangsstufe mittels der Überwachungseinheit gesteuert werden, beispielsweise direkt oder unter Zwischenschaltung der Steuereinheit. Vorzugsweise umfasst das Blattwinkelverstellsystem und/oder der Umrichter eine Zwischenkreisspannungs-Erfassungseinrichtung, mittels welcher eine an dem Zwischenkreis anliegende elektrische Zwischenkreisspannung erfasst wird. Insbesondere ist die Überwachungseinheit mit der Zwischenkreisspannungs-Erfassungseinrichtung verbunden. Bevorzugt wird mittels der Überwachungseinheit die Zwischenkreisspannung erfasst. Die Komponenten umfassen bevorzugt den Energiespeicher. Insbesondere wird zur Überprüfung der Funktionsfähigkeit des Energiespeichers im Normalbetrieb mittels der Überwachungseinheit die Eingangsstufe zum Herabsetzen der Zwischenkreisspannung von einer Zwischenkreis-Nennspannung auf eine unter dieser liegende, insbesondere vorgegebene, Prüfspannung angesteuert, die unter einer dem Energiespeicher zugeordneten, insbesondere vorgegebenen, Mindestspannung liegt, und die Zwischenkreisspannung mit der Mindestspannung verglichen. Die Komponenten umfassen bevorzugt auch die oder eine elektrische Verbindung zwischen dem Energiespeicher und dem Zwischenkreis.

Die Eingangsstufe ist insbesondere eine gleichrichtende Eingangsstufe oder ein Gleichrichter, vorzugsweise ein gesteuerter Gleichrichter. Der Zwischenkreis ist bevorzugt ein Gleichspannungszwischenkreis und/oder Gleichstromzwischenkreis. Insbesondere umfasst der Zwischenkreis einen Zwischenkreiskondensator. Die Ausgangsstufe ist bevorzugt eine Transistorausgangsstufe. Beispielsweise bildet die Ausgangsstufe einen Wechselrichter und/oder einen Pulsweitenmodulator.

Der elektrische Energiespeicher ist insbesondere über ein oder wenigstens ein gleichrichtendes Bauelement, wie z.B. eine oder wenigstens eine Diode, an den Zwischenkreis angeschlossen. Bevorzugt umfasst die elektrische Verbindung zwischen dem Energiespeicher und dem Zwischenkreis das oder das wenigstens eine gleichrichtende Bauelement. Vorteilhaft umfasst der Energiespeicher wenigstens eine, insbesondere wiederaufladbare, Batterie und/oder wenigstens einen Kondensator. Die wiederaufladbare Batterie wird z.B. auch als Akkumulator bezeichnet.

Die Prüfspannung ist vorzugsweise ungleich Null. Vorteilhaft ist die Prüfspannung größer Null. Bevorzugt ist die Prüfspannung derart hoch, dass der Umrichter und/oder der Elektromotor auch bei an dem Zwischenkreis anliegender Prüfspannung betrieben werden können. Der Umrichter und/oder der Elektromotor können somit insbesondere mit Prüfspannung betrieben werden. Liegt die Zwischenkreisspannung unter der Mindestspannung des Energiespeichers und/oder entspricht die Zwischenkreisspannung der Prüfspannung, wird bevorzugt mittels der Überwachungseinheit ein Fehler an die Betriebssteuereinrichtung gemeldet und/oder das Ansteuern der Eingangsstufe zum Herabsetzen der Zwischenkreisspannung beendet, die daraufhin insbesondere wieder ihre Nennspannung annimmt.

Gemäß einer Weiterbildung umfasst das Blattwinkelverstellsystem und/oder der Umrichter eine Energiespeicherstrom-Erfassungseinrichtung, mittels welcher ein von dem Energiespeicher abgegebener elektrischer Energiespeicherstrom erfasst wird. Bevorzugt ist die Überwachungseinheit mit der Energiespeicherstrom-Erfassungseinrichtung verbunden. Vorteilhaft wird mittels der Überwachungseinheit der Energiespeicherstrom erfasst. Vorzugsweise ist die Überwachungseinheit mit dem Elektromotor verbunden. Vorteilhaft kann der Elektromotor mittels der Überwachungseinheit gesteuert werden, beispielsweise direkt oder unter Zwischenschaltung der Steuereinheit und/oder des Umrichters und/oder der Ausgangsstufe. Insbesondere wird zur ergänzenden Überprüfung der Funktionsfähigkeit des Energiespeichers im Normalbetrieb mittels der Überwachungseinheit
- die Ausgangsstufe derart angesteuert, dass der Energiespeicher über den Umrichter mit dem Elektromotor, vorzugsweise ohne oder ohne wesentliche Änderung der von diesem, insbesondere im Normalbetrieb und/oder aktuell, abgegebenen mechanischen Leistung, elektrisch belastet wird, während die Eingangsstufe von der Überwachungseinheit zum Herabsetzen der Zwischenkreisspannung auf die Prüfspannung angesteuert wird,
- die Entladung des Energiespeichers, insbesondere auf Basis der Zwischenkreisspannung und/oder des Energiespeicherstroms, beobachtet,
- aus der Beobachtung der Entladung wenigstens eine den aktuellen Zustand des elektrischen Energiespeichers charakterisierende Information gebildet und
- die Information und/oder der aktuelle Zustand des Energiespeichers mit vorgegebenen Anforderungen an den Zustand des Energiespeichers und/oder mit einem vorgegebenen Soll-Zustand des Energiespeichers verglichen.
Hierdurch wird der Zustand des Energiespeichers überprüft. Bevorzugt umfasst der aktuelle Zustand des elektrischen Energiespeichers und/oder die den aktuellen Zustand des elektrischen Energiespeichers charakterisierende Information den SoC-Zustand (Ladezustand) des Energiespeichers (engl.: SoC = State of Charge) und/oder den SoH-Zustand des Energiespeichers (engl.: SoH = State of Health). Insbesondere umfassen die vorgegebenen Anforderungen an den Zustand des elektrischen Energiespeichers und/oder der vorgegebene Soll-Zustand des Energiespeichers einen vorgegebenen Soll-SoC-Zustand des Energiespeichers und/oder einen vorgegebenen Soll-SoH-Zustand des Energiespeichers. Entspricht der aktuelle Zustand des Energiespeichers nicht den vorgegebenen Anforderungen oder dem Soll-Zustand und/oder weicht der aktuelle Zustand des Energiespeichers von den vorgegebenen Anforderungen oder dem Soll-Zustand über ein vorgegebenes Maß hinaus ab, wird bevorzugt mittels der Überwachungseinheit ein Fehler an die Betriebssteuereinrichtung gemeldet.

Gemäß einer Ausgestaltung werden eine oder mehrere an dem Elektromotor anliegende elektrische Motorspannungen mittels der Überwachungseinheit, insbesondere unter Zwischenschaltung der Steuereinheit und/oder der Ausgangsstufe, derart moduliert, dass eine definierte elektrische Belastung des Energiespeichers, vorzugsweise ohne oder ohne wesentliche Änderung der von dem Elektromotor, insbesondere im Normalbetrieb und/oder aktuell, abgegebenen mechanischen Leistung und/oder des von dem Elektromotor abgegebenen Drehmoments und/oder der Drehzahl des Elektromotors, erzielt wird. Der Ausdruck "ohne oder ohne wesentliche Änderung der von dem Elektromotor abgegebenen mechanischen Leistung" bedeutet insbesondere ohne oder ohne wesentliche Änderung des von dem Elektromotor abgegebenen Drehmoments und/oder der Drehzahl des Elektromotors. Ein oder mehrere zum Hervorrufen der definierten elektrischen Belastung des Energiespeichers dem Elektromotor zugeführte Motorströme werden durch die Modulation der Motorspannungen insbesondere in den Elektromotor eingeprägt. Die Energiespeicherstrom-Erfassungseinrichtung ist bevorzugt eine Zwischenkreisstrom-Erfassungseinrichtung, mittels welcher der im Zwischenkreis fließende Strom erfasst wird. Alternativ ist die Energiespeicherstrom-Erfassungseinrichtung z.B. eine Motorstrom-Erfassungseinrichtung, mittels welcher der oder die dem Elektromotor zugeführten und/oder in diesen eingeprägten Motorströme erfasst werden.

Gemäß einer Weiterbildung umfasst das Blattwinkelverstellsystem wenigstens eine elektrisch betätigbare Bremse, mittels welcher das Rotorblatt bezüglich einer Drehung relativ zu der Rotornabe festsetzbar oder bremsbar ist. Bevorzugt umfasst das Blattwinkelverstellsystem ferner eine Bremsensteuereinrichtung, mittels welcher die Bremse gesteuert wird. Die Bremsensteuereinrichtung wird vorzugsweise mittels der Steuereinheit gesteuert. Gemäß einer Ausgestaltung ist die Bremsensteuereinrichtung in die Steuereinheit integriert. Bevorzugt wird die Bremse mittels der Steuereinheit, insbesondere unter Zwischenhaltung der Bremsensteuereinrichtung, gesteuert. Bevorzugt ist die Bremse mit der Bremsensteuereinrichtung und/oder mit der Steuereinheit über elektrische Bremsenanschlussleitungen verbunden. Die Komponenten umfassen vorzugsweise die Bremse und/oder die Bremsensteuereinrichtung und/oder die Bremsenanschlussleitungen. Bevorzugt umfasst das Blattwinkelverstellsystem eine Bremsenstrom-Erfassungseinrichtung, mittels welcher ein der Bremse zugeführter elektrischer Bremsenstrom erfasst wird. Vorzugsweise ist die Überwachungseinheit mit der Bremsenstrom-Erfassungseinrichtung verbunden. Insbesondere wird mittels der Überwachungseinheit der Bremsenstrom erfasst. Vorteilhaft wird zur Überprüfung der Funktionsfähigkeit der Bremse und/oder der Bremsensteuereinrichtung und/oder der Bremsenanschlussleitungen im Normalbetrieb mittels der Überwachungseinheit der oder ein der Bremse zugeführter elektrischer Bremsenstrom und/oder ein zeitlicher Verlauf des Bremsenstroms auf Plausibilität hin überprüft. Ist der Bremsenstrom und/oder der Verlauf des Bremsenstroms nicht plausibel, liegt insbesondere ein Fehler in der Bremse und/oder in der Bremsensteuereinrichtung und/oder in den Bremsenanschlussleitungen vor. Bevorzugt wird im durch die Bremse festgesetzten Zustand des Rotorblatts zur Überprüfung der Funktionsfähigkeit der Bremse und/oder der Bremsensteuereinrichtung und/oder der Bremsenanschlussleitungen im Normalbetrieb mittels der Überwachungseinheit, insbesondere mittels der Drehwinkelgebereinrichtung, die Blattwinkelstellung des Rotorblatts auf eine Änderung hin überprüft. Wird im durch die Bremse festgesetzten Zustand des Rotorblatts eine Änderung der Blattwinkelstellung des Rotorblatts erfasst, liegt insbesondere ein Fehler in der Bremse und/oder in der Bremsensteuereinrichtung und/oder in den Bremsenanschlussleitungen vor. Die Bremsenanschlussleitungen umfassen z.B. ein oder mehrere stromunterbrechende Elemente, wie z.B. Schütze oder Relais. Die Bremse ist bevorzugt eine elektro-mechanische Bremse. Insbesondere ist die Bremse eine Haltebremse. Liegt ein Fehler in der Bremse und/oder in der Bremsensteuereinrichtung und/oder in den Bremsenanschlussleitungen vor, wird bevorzugt mittels der Überwachungseinheit ein Fehler an die Betriebssteuereinrichtung gemeldet.

Gemäß einer Ausgestaltung umfasst das Blattwinkelverstellsystem eine Blattwinkelsteuervorrichtung und eine oder wenigstens eine, insbesondere mit der Blattwinkelsteuervorrichtung verbundene und/oder von der Blattwinkelsteuervorrichtung gesteuerte oder steuerbare, Blattwinkelverstellvorrichtung. Insbesondere ist das Rotorblatt mittels der Blattwinkelverstellvorrichtung relativ zu der Rotornabe drehbar und/oder das Rotorblatt wird insbesondere mittels der Blattwinkelverstellvorrichtung relativ zu der Rotornabe gedreht. Vorteilhaft ist die Blattwinkelverstellvorrichtung mechanisch mit dem Rotorblatt verbunden. Bevorzugt umfasst die Blattwinkelverstellvorrichtung den Notabschaltungs-Steuersignal-Eingang und/oder die Frequenz-Erfassungseinrichtung und/oder den Umrichter und/oder die Steuereinheit und/oder den Elektromotor und/oder die Drehwinkelgebereinrichtung und/oder den oder die Endschalter und/oder die Zwischenkreisspannungs-Erfassungseinrichtung und/oder die Energiespeicherstrom-Erfassungseinrichtung und/oder die Bremse und/oder die Bremsenstrom-Erfassungseinrichtung und/oder die Überwachungseinheit oder einen Teil der Überwachungseinheit. Insbesondere ist die Betriebssteuereinrichtung mit der Blattwinkelverstellvorrichtung durch die oder die wenigstens eine Notabschaltungs-Steuerleitung verbunden. Vorteilhaft steht die Blattwinkelsteuervorrichtung mit der Betriebssteuereinrichtung in Kommunikationsverbindung. Bevorzugt umfasst die Blattwinkelsteuervorrichtung die Überwachungseinheit oder einen Teil oder anderen Teil der Überwachungseinheit.

Gemäß einer Ausgestaltung weist die Überwachungseinheit eine Zentraleinheit auf, wobei die Blattwinkelsteuervorrichtung die Zentraleinheit umfasst. Vorteilhaft weist die Überwachungseinheit eine oder wenigstens eine mit der Zentraleinheit verbundene und/oder mit dieser in Kommunikationsverbindung stehende Untereinheit auf, wobei die Blattwinkelverstellvorrichtung die Untereinheit umfasst. Die Untereinheit ist insbesondere von der Zentraleinheit steuerbar oder wird von dieser gesteuert.

Gemäß einer Weiterbildung weist die Rotornabe mehrere, vorzugsweise zwei oder drei, an dieser drehbar gelagerte Rotorblätter auf. Bevorzugt sind mittels des Blattwinkelverstellsystems die Rotorblätter relativ zu der Rotornabe drehbar und somit insbesondere in unterschiedliche Blattwinkelstellungen positionierbar, wobei vorzugsweise Steuerbefehle zum Positionieren der Rotorblätter von der Betriebssteuereinrichtung an das Blattwinkelverstellsystem abgebbar sind oder abgegebenen werden, und wobei bevorzugt das Blattwinkelverstellsystem im Normalbetrieb der Windkraftanlage den Steuerbefehlen folgt und die Rotorblätter entsprechend positioniert.

Gemäß einer Ausgestaltung umfasst das Blattwinkelverstellsystem die oder eine Blattwinkelsteuervorrichtung und je Rotorblatt eine, insbesondere mit der Blattwinkelsteuervorrichtung verbundene und/oder von der Blattwinkelsteuervorrichtung gesteuerte oder steuerbare, Blattwinkelverstellvorrichtung. Vorteilhaft ist jede Blattwinkelverstellvorrichtung wie die zuvor beschriebene Blattwinkelverstellvorrichtung ausgebildet. Insbesondere ist jedes Rotorblatt mittels der jeweiligen Blattwinkelverstellvorrichtung relativ zu der Rotornabe drehbar und/oder jedes Rotorblatt wird insbesondere mittels der jeweiligen Blattwinkelverstellvorrichtung relativ zu der Rotornabe gedreht. Vorteilhaft ist jede Blattwinkelverstellvorrichtung mechanisch mit dem jeweiligen Rotorblatt verbunden. Bevorzugt umfasst jede Blattwinkelverstellvorrichtung einen Notabschaltungs-Steuersignal-Eingang und/oder eine Frequenz-Erfassungseinrichtung und/oder einen Umrichter und/oder eine Steuereinheit und/oder einen Elektromotor und/oder eine Drehwinkelgebereinrichtung und/oder eine Zwischenkreisspannungs-Erfassungseinrichtung und/oder eine Energiespeicherstrom-Erfassungseinrichtung und/oder eine Bremse und/oder eine Bremsenstrom-Erfassungseinrichtung und/oder einen Teil der Überwachungseinheit. Insbesondere ist die Betriebssteuereinrichtung mit jeder Blattwinkelverstellvorrichtung durch eine oder wenigstens eine Notabschaltungs-Steuerleitung verbunden. Vorteilhaft steht die Blattwinkelsteuervorrichtung mit der Betriebssteuereinrichtung in Kommunikationsverbindung. Bevorzugt umfasst die Blattwinkelsteuervorrichtung die Überwachungseinheit oder einen Teil oder anderen Teil der Überwachungseinheit. Bevorzugt weist die Überwachungseinheit mehrere mit der Zentraleinheit verbundene und/oder mit dieser in Kommunikationsverbindung stehende Untereinheiten auf, wobei die Blattwinkelverstellvorrichtungen jeweils eine der Untereinheiten umfassen. Insbesondere ist jede Untereinheit von der Zentraleinheit steuerbar oder wird von dieser gesteuert.

Die Erfindung wird nachfolgend anhand einer bevorzugten Ausführungsform unter Bezugnahme auf die Zeichnung beschrieben. In der Zeichnung zeigen:
Fig. 1 eine schematische Seitenansicht einer Windkraftanlage gemäß einer Ausführungsform,
Fig. 2 eine schematische Ansicht einer Betriebssteuereinrichtung und eines Blattwinkelverstellsystems der Windkraftanlage,
Fig. 3 eine schematische Ansicht einer Blattwinkelverstellvorrichtung des Blattwinkelverstellsystems und
Fig. 4 einen schematischen Ablauf einer Überprüfung der Funktionsfähigkeit von zur Notabschaltung der Windkraftanlage einsetzbarerer Komponenten.

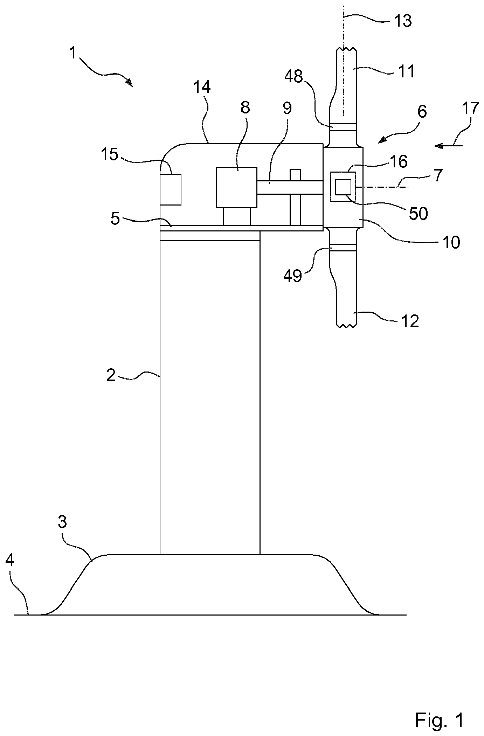

Aus Fig. 1 ist eine schematische Seitenansicht einer Windkraftanlage 1 gemäß einer Ausführungsform ersichtlich. Die Windkraftanlage 1 umfasst einen Turm 2, der mittels eines Fundaments 3 im Erdboden 4 verankert ist. An seinem dem Erdboden 4 abgewandten Ende ist auf dem Turm 2 ein Maschinenträger 5 gelagert, an dem ein Rotor 6 um eine Rotorachse 7 drehbar gelagert ist. Ferner ist an dem Maschinenträger 5 ein elektrischer Generator 8 befestigt, der über eine Rotorwelle 9 mit dem Rotor 6 verbunden ist. Der Rotor 6 umfasst eine Rotornabe 10 und mehrere Rotorblätter 11 und 12, die sich jeweils entlang einer quer oder näherungsweise quer zur Rotorachse 7 verlaufenden Blattachse von der Rotornabe 10 wegerstrecken. Die Rotorblätter 11 und 12 sind jeweils um ihre Blattachse drehbar an der Rotornabe 10 gelagert, wobei in Fig. 1 lediglich die Blattachse 13 des Rotorblatts 11 gezeigt ist. Die drehbare Lagerung der Rotorblätter 11 und 12 an der Rotornabe 10 erfolgt dabei jeweils über ein Blattlager 48 bzw. 49. Der Maschinenträger 5 trägt ein Maschinenhaus 14, in dem eine Betriebssteuereinrichtung 15 angeordnet ist, die eine übergeordnete Steuerung für den Betrieb der Windkraftanlage 1 bildet. Ferner ist in der Rotornabe 10 ein Blattwinkelverstellsystem 16 vorgesehen, mittels welchem die Rotorblätter 11 und 12 jeweils um ihre Blattachse relativ zu der Rotornabe 10 drehbar sind. Der Rotor 6 wird durch Wind 17 zu einer Drehung um die Rotorachse 7 angetrieben.

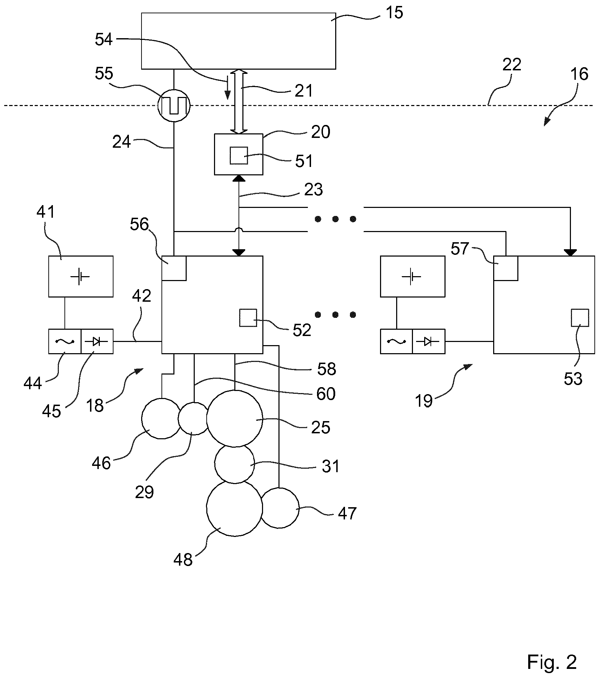

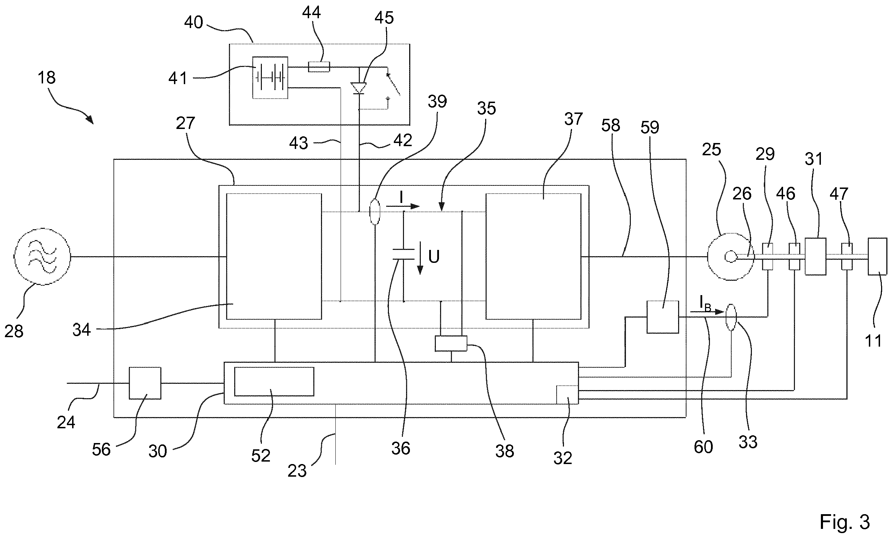

Aus Fig. 2 ist eine schematische Ansicht der Betriebssteuereinrichtung 15 und des Blattwinkelverstellsystems 16 ersichtlich, welches Blattwinkelverstellvorrichtungen 18 und 19 aufweist, die jeweils einem der Rotorblätter 11 bzw. 12 zugeordnet sind. Dabei ist die Blattwinkelverstellvorrichtung 18 dem Rotorblatt 11 und die Blattwinkelverstellvorrichtung 19 dem Rotorblatt 12 zugeordnet. Ferner umfasst das Blattwinkelverstellsystems 16 eine Blattwinkelsteuervorrichtung 20, die über Kommunikationsleitungen 21 mit der Betriebssteuereinrichtung 15 verbunden und von dieser steuerbar ist. Die Schnittstelle zwischen dem Rotor 6 und dem Maschinenträger 5 oder Maschinenhaus 14 ist dabei durch eine gestrichelte Linie 22 angedeutet. Die Blattwinkelverstellvorrichtungen 18 und 19 sind über Kommunikationsleitungen 23 mit der Blattwinkelsteuervorrichtung 20 verbunden und von dieser steuerbar. Zusätzlich sind die Blattwinkelverstellvorrichtungen 18 und 19 über Notabschaltungs-Steuerleitungen 24 mit der Betriebssteuereinrichtung 15 verbunden. Die Blattwinkelverstellvorrichtungen 18 und 19 weisen dazu jeweils einen Notabschaltungs-Steuersignal-Eingang 56 bzw. 57 auf, an welchen die Notabschaltungs-Steuerleitungen 24 angeschlossen sind. Die Blattwinkelverstellvorrichtungen 18 und 19 sind zwar jeweils einem anderen Rotorblatt zugeordnet, ansonsten aber identisch aufgebaut, sodass sich im Folgenden auf die Beschreibung der Blattwinkelverstellvorrichtung 18 beschränkt wird, die in schematischer Darstellung aus Fig. 3 ersichtlich ist.

Die Blattwinkelverstellvorrichtung 18 umfasst einen Elektromotor 25 mit einer Motorwelle 26, einen Umrichter 27, der eingangsseitig an eine elektrische Stromversorgung 28 und ausgangsseitig über Motoranschlussleitungen 58 an den Elektromotor 25 angeschlossen ist, eine Bremsensteuereinrichtung 59, eine von der Bremsensteuereinrichtung 59 steuerbare und an diese über Bremsenanschlussleitungen 60 angeschlossene elektrisch betätigbare Bremse 29, mittels welcher die Motorwelle 26 gebremst und/oder festgesetzt werden kann, und eine Steuereinheit 30, mittels welcher der Umrichter 27 gesteuert werden kann. Ferner kann mittels der Steuereinheit 30 der Elektromotor 25 unter Zwischenschaltung des Umrichters 27 gesteuert werden. Auch kann die Bremsensteuereinrichtung 59 mittels der Steuereinheit 30 gesteuert werden. Die Bremsensteuereinrichtung 59 kann aber auch in die Steuereinheit 30 integriert sein. Insbesondere kann die Bremse 29, beispielsweise unter Zwischenschaltung der Bremsensteuereinrichtung 59, mittels der Steuereinheit 30 gesteuert werden. Die Motorwelle 26 ist über ein Getriebe 31 mit dem Rotorblatt 11 verbunden, sodass dieses durch den Elektromotor 25 relativ zur Rotornabe 10 gedreht und dadurch in unterschiedliche Blattwinkelstellungen positioniert werden kann. Die Blattwinkelverstellvorrichtung 18 umfasst ferner eine Drehwinkelgebereinrichtung 32, mittels welcher die Blattwinkelstellung des Rotorblatts 11 erfassbar ist, und eine Bremsenstrom-Erfassungseinrichtung 33, mittels welcher ein der Bremse 29 zugeführter Bremsenstrom I_{B} erfasst werden kann. Der Umrichter 27 umfasst eine an die elektrische Stromversorgung 28 angeschlossene Eingangsstufe 34, einen der Eingangsstufe nachgeschalteten Zwischenkreis 35 mit einem elektrischen Zwischenkreiskondensator 36 und eine dem Zwischenkreis 35 nachgeschaltete Ausgangsstufe 37, an welcher der Elektromotor 25 angeschlossen ist. Die Blattwinkelverstellvorrichtung 18 umfasst auch eine Zwischenkreisspannungs-Erfassungseinrichtung 38, mittels welcher eine an dem Zwischenkreis 35 anliegende Zwischenkreisspannung U erfassbar ist, und eine Zwischenkreisstrom-Erfassungseinrichtung 39, mittels welcher ein im Zwischenkreis 35 fließender Zwischenkreisstrom I erfassbar ist. Zusätzlich umfasst die Blattwinkelverstellvorrichtung 18 eine Notstromversorgungseinrichtung 40 mit einem elektrischen Energiespeicher 41 in Form einer Batterie, der über Anschlussleitungen 42 und 43 elektrisch an den Zwischenkreis 35 angeschlossen ist. Dabei sind in die Anschlussleitung 42 eine Sicherung 44 und eine Diode 45 geschaltet.

Die Drehwinkelgebereinrichtung 32 umfasst zwei Drehwinkelgeber 46 und 47, wobei mittels des Drehwinkelgebers 46 die Drehwinkelstellung der Motorwelle 26 und mittels des Drehwinkelgebers 47 die Drehwinkelstellung der Rotorblatts 11 erfassbar ist. Da die Motorwelle 26, insbesondere unter Zwischenschaltung des Getriebes 31, drehstarr mit dem Rotorblatt 11 verbunden ist, repräsentieren beide Drehwinkelstellungen die Blattwinkelstellung des Rotorblatts 11. Das Getriebe 31 ist insbesondere ein Zahnradgetriebe. Obwohl die Drehwinkelgebereinrichtung 32 gemäß Fig. 3 in die Steuereinheit 30 integriert ist, kann die Drehwinkelgebereinrichtung 32 auch separat von der Steuereinheit 30 vorgesehen und mit dieser verbunden sein.

Das Blattwinkelverstellsystem 16 weist eine Überwachungseinheit 50 auf, die eine in die Blattwinkelsteuervorrichtung 20 integrierte Zentraleinheit 51 und mehrere Untereinheiten 52 und 53 umfasst, die jeweils in eine der Blattwinkelverstellvorrichtungen 18 und 19 integriert sind. Mittels der Überwachungseinheit 50 werden im Normalbetrieb der Windkraftanlage 1 Komponenten des Blattwinkelverstellsystems 16 auf Funktionsfähigkeit hin überprüft, die für eine Notabschaltung der Windkraftanlage 1 eingesetzt werden oder werden können. In den Blattwinkelverstellvorrichtungen 18 und 19 erfolgt diese Überprüfung durch die jeweilige Untereinheit 52 bzw. 53, wobei die von den Untereinheiten 52 und 53 durchgeführten Überprüfungen von der Zentraleinheit 51 koordiniert werden. Die Untereinheiten 52 und 53 sind dabei identisch aufgebaut.

Nachfolgend wird noch der Begriff "Normalbetrieb" erläutert. Im Betrieb der Windkraftanlage 1 werden von der Betriebssteuereinrichtung 15 über die Kommunikationsleitungen 21 Steuerbefehle 54 zum Positionieren der Rotorblätter 11 und 12 an das Blattwinkelverstellsystem 16 abgegeben. Der Normalbetrieb ist insbesondere dadurch definiert, dass das Blattwinkelverstellsystem 16 diesen Steuerbefehlen 54 folgt und die Rotorblätter 11 und 12 entsprechend positioniert.

Liegt hingegen ein gravierender Fehler in der Windkraftanlage 1 vor, muss diese abgeschaltet werden, was auch als Notabschaltung oder Notabschaltbetrieb bezeichnet wird. Ein gravierender Fehler liegt insbesondere dann vor, wenn eine der Komponenten einen Fehler aufweist, die für die Notabschaltung der Windkraftanlage 1 eingesetzt werden oder werden können. In diesem Fall werden die Rotorblätter 11 und 12 jeweils in eine sichere Blattwinkelstellung gedreht, die auch als Fahnenstellung bezeichnet wird. Jedes Rotorblatt wird dabei solange in Richtung auf seine sichere Blattwinkelstellung gedreht, bis ein der sicheren Blattwinkelstellung zugeordneter Endschalter erreicht wird. Für das Rotorblatt 11 ist ein erster oder primärer Endschalter durch die Drehwinkelgebereinrichtung 32 gebildet. Ferner ist bevorzugt ein zweiter oder sekundärer Endschalter vorgesehen, der mechanisch zu betätigen und insbesondere geringfügig gegenüber dem ersten Endschalter versetzt ist. Der zweite Endschalter ist für den Fall vorgesehen, dass der durch die Drehwinkelgebereinrichtung 32 gebildete erste Endschalter ausgefallen oder fehlerhaft ist. Insbesondere wird der erste Endschalter als Software-Endschalter bezeichnet. Der zweite Endschalter wird z.B. als physikalischer Endschalter bezeichnet. Bevorzugt ist zusätzlich ein dritter oder tertiärer Endschalter vorgesehen, der mechanisch zu betätigen und vorzugsweise geringfügig gegenüber dem zweiten Endschalter versetzt ist. Der dritte Endschalter ist für den Fall vorgesehen, dass der erste und/oder der zweite Endschalter ausgefallen oder fehlerhaft sind. Auch der dritte Endschalter wird z.B. als physikalischer Endschalter bezeichnet.

Die Notabschaltung kann auf unterschiedliche Weisen initiiert werden. In einem einfachen Fall gibt die Betriebssteuereinrichtung 15 über die Kommunikationsleitungen 21 Steuerbefehle 54 zum Positionieren der Rotorblätter 11 und 12 in die sichere Blattwinkelstellung an das Blattwinkelverstellsystem 16 ab. Dies entspricht einer normalen Abschaltung der Windkraftanlage 1.

In einem anderen Fall wird die Notabschaltung über die Notabschaltungs-Steuerleitungen 24 initiiert. Im Normalbetrieb wird von der Betriebssteuereinrichtung 15 über die Notabschaltungs-Steuerleitungen 24 an die Blattwinkelverstellvorrichtungen 18 und 19 ein Notabschaltungs-Steuersignal 55 (EFC) übermittelt, welches im Falle einer Notabschaltung von der Betriebssteuereinrichtung 15 abgestellt oder abgeschaltet wird. Die Blattwinkelverstellvorrichtungen 18 und 19 erkennen das Ausbleiben des Notabschaltungs-Steuersignals 55 und drehen die Rotorblätter 11 und 12 in die sichere Blattwinkelstellung.

In einem weiteren Fall wird die Notabschaltung durch die Überwachungseinheit 50 initiiert. Die Überwachungseinheit 50 überprüft die Funktionsfähigkeit von Komponenten des Blattwinkelverstellsystems 16, die zur Verfügung stehen müssen, um eine Notabschaltung sicherzustellen. Wird ein Fehler in wenigstens einer dieser Komponenten erkannt, so wird von der Überwachungseinheit 50 eine Fehlmeldung an die Betriebssteuereinrichtung 15 abgegeben, die daraufhin die Notabschaltung der Windkraftanlage veranlasst oder initiiert. Überprüft wird dabei auch die Funktionsfähigkeit der Notabschaltungs-Steuerleitungen 24. Das Notabschaltungs-Steuersignal 55 liegt hier in Form eines periodischen Signals definierter Frequenz vor, dessen Frequenz von der Überwachungseinheit 50, insbesondere von den Untereinheiten 53 und 52 überprüft wird. Weicht die Frequenz des Notabschaltungs-Steuersignals 55 über ein vorgegebenes Maß hinaus von der definierten Frequenz ab, so wird von der Überwachungseinheit 50 eine Fehlmeldung an die Betriebssteuereinrichtung 15 abgegeben, die daraufhin die Notabschaltung der Windkraftanlage initiiert.

Der Notabschaltungs-Steuersignal-Eingang 56 ist bevorzugt als Toggle-Eingang realisiert, wie z.B. bei gegenseitigen Überwachungen, in der Art eines Watch-Dog Signals. Ferner ist das Notabschaltungs-Steuersignal 55 bevorzugt ein Rechtecksignal. Somit liegt insbesondere der Normalzustand vor, solange die Betriebssteuereinrichtung 15 das Rechtecksignal 55 mit der definierten Frequenz an den Notabschaltungs-Steuersignal-Eingang 56 anlegt. Erst bei Ausbleiben von definierten Flankenwechseln des Notabschaltungs-Steuersignals 55 wird die Notabschaltung ausgelöst.

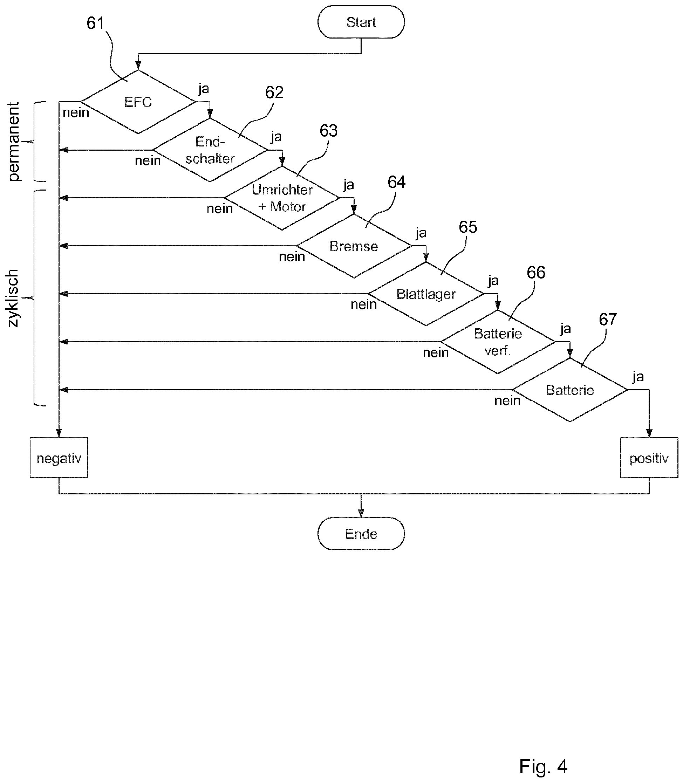

Ein Beispiel für den Ablauf der Überprüfung der Funktionsfähigkeit der Komponenten ist aus Fig. 4 ersichtlich und wird nachfolgend erläutert.

Die auf Funktionsfähigkeit zu überprüfenden Komponenten umfassen insbesondere die Notabschaltungs-Steuerleitungen 24 und/oder den Notabschaltungs-Steuersignal-Eingang 56 und/oder den Drehwinkelgeber 46 und/oder den Drehwinkelgeber 47 und/oder den Umrichter 27 und/oder die Steuereinheit 30 und/oder den Elektromotor 25 und/oder die Motoranschlussleitungen 58 und/oder die Bremsenanschlussleitungen 60 und/oder die Bremse 29 und/oder das Blattlager 48 und/oder die Diode 45 und/oder die Sicherung 44 und/oder die Verbindungsleitungen 42 und 43 und/oder den elektrischen Energiespeicher 41 und/oder das Getriebe 31.

In einem ersten Schritt 61 werden die Notabschaltungs-Steuerleitungen 24 und/oder der Notabschaltungs-Steuersignal-Eingang 56 auf Funktionsfähigkeit überprüft. Bevorzugt werden zusätzlich, vorzugsweise durch das Watch-Dog- oder Heartbeat-Prinzip, indirekt Teile der Betriebssteuereinrichtung 15 auf Funktionsfähigkeit überprüft. Die Überprüfung gemäß Schritt 61 erfolgt insbesondere im oder parallel zum Normalbetrieb und ist insbesondere permanent aktiv und/oder aussagefähig.

In einem zweiten Schritt 62 wird die Drehwinkelgebereinrichtung 32 und/oder der durch die Drehwinkelgebereinrichtung 32 gebildete primäre Endschalter auf Funktionsfähigkeit überprüft, was in diesem Fall insbesondere die Funktionsfähigkeit und Plausibilität der beiden Drehwinkelgeber 46 und 47 entspricht. Die Überprüfung gemäß Schritt 62 erfolgt insbesondere im oder parallel zum Normalbetrieb und ist insbesondere permanent aktiv und/oder aussagefähig.

Der erste Endschalter kann so konfiguriert werden, dass er kurz vor dem zweiten Endschalter liegt, sodass bei einem Defekt im ersten Endschalter bevorzugt noch zwei weitere Endschalter zur Verfügung stehen. Eine andere Möglichkeit besteht z.B. darin, einen der physikalischen, insbesondere den zweiten, Endschalter entfallen zu lassen, sodass Kosten gespart werden können.

In einem dritten Schritt 63 werden der Umrichter 27 und/oder der Elektromotor 25 und/oder die Motoranschlussleitungen 58 auf Funktionsfähigkeit überprüft. Ergänzend wird bevorzugt auch die Steuereinheit 30 auf Funktionsfähigkeit überprüft. Die Überprüfung gemäß Schritt 63 wird vorzugsweise durch die Untereinheit 52 durchgeführt. Insbesondere entspricht diese Überprüfung einer Überprüfung des den Umrichter 27 und den Elektromotor 25 umfassenden Antriebs. Vorzugsweise bleibt die parallel laufende Überprüfung aus den Schritten 61 und 62 während des Schritts 63 aktiv.

Die Untereinheit 52 überprüft insbesondere das Verhalten des Antriebs und bezieht vorzugsweise alle relevanten internen Statusmeldungen mit ein. Ergänzend kann beispielsweise auch die Auslastung mit berücksichtigt werden, sodass eine Überlastung vermeidbar ist.

Die Überprüfung erfolgt bevorzugt permanent, insbesondere solange das Blattwinkelverstellsystem 16 aktiv ist. Alternativ erfolgt die Überprüfung zyklisch und wird beispielsweise durch die Zentraleinheit 51 initiiert oder getriggert.

In einem vierten Schritt 64 werden die Bremse 29 und/oder die Bremsenanschlussleitungen 60 auf Funktionsfähigkeit überprüft. Die Überprüfung gemäß Schritt 64 erfolgt bevorzugt durch die Untereinheit 52. Ergänzend oder alternativ kann diese Überprüfung durch die Zentraleinheit 51 zyklisch initiiert oder getriggert werden. Bevorzugt wird die Überprüfung der Funktionsfähigkeit der Bremse 29 auf folgende Arten durchgeführt:
a) Durch Erfassen des Bremsenstroms I_{B} und Überprüfen desselben auf Plausibilität.
b) Durch Erfassen der Blattwinkelstellung und/oder der Drehwinkelstellung der Motorwelle, sofern das Rotorblatt durch die Bremse 29 festgesetzt oder gehalten wird.
c) Durch Ermittlung des Bremsenhaltemoments, indem durch den Elektromotor 25 ein stetig wachsendes Moment auf die geschlossene Bremse 29 gegeben wird, bis das definierte Bremsenhaltemoment erreicht ist. Dabei wird insbesondere die Drehwinkelstellung oder die Drehzahl der Motorwelle als Indikator genutzt, ob die Bremse 29 greift oder nicht.
Die unterschiedlichen Arten a) bis c) können auch miteinander kombiniert werden.

In einem fünften Schritt 65 werden das Blattlager 48 und/oder das Getriebe 31 auf Funktionsfähigkeit überprüft. Dabei werden bevorzugt die nachfolgend aufgeführten Komponenten einbezogen: der Drehwinkelgeber 46 und/oder der Drehwinkelgeber 47 und/oder der Umrichter 27 und/oder die Steuereinheit 30 und/oder der Elektromotor 25 und/oder die Motoranschlussleitungen 58 und/oder die Bremsenanschlussleitungen 60 und/oder die Bremse 29 und/oder die Diode 45 und/oder die Sicherung 44 und/oder die Verbindungsleitungen 42 und 43 und/oder der elektrische Energiespeicher 41.

Insbesondere handelt es sich dabei um den Kraftübertragungsstrang, bestehend aus Getriebe und/oder Kupplung und/oder Motorwelle und/oder Ritzel und/oder Blattlager. Die Überprüfung gemäß Schritt 65 erfolgt vorzugsweise durch die Untereinheit 52. Bevorzugt erfolgt die Überprüfung permanent, insbesondere solange das Blattwinkelverstellsystem 16 aktiv ist und das Rotorblatt 11 gedreht wird. Die Überprüfung kann aber auch zyklisch durch die Zentraleinheit 51 initiiert oder getriggert werden, beispielweise in dem Fall, dass das Blattwinkelverstellsystem 16 über längere Zeit nicht genutzt wird, aber dennoch eine Aussage erzeugt werden soll. In diesem Fall wird das Rotorblatt 11 bevorzugt um einen vordefinierten, insbesondere zulässigen, Test-Winkel gedreht.

In einem sechsten Schritt 66 werden der elektrische Energiespeicher 41 und/oder die Diode 45 und/oder die Sicherung 44 und/oder die Verbindungsleitungen 42 und 43 auf Funktionsfähigkeit überprüft, insbesondere durch Absenken der Zwischenkreisspannung U auf eine Prüfspannung, die unter einer vorgebegeben Mindestspannung des Energiespeichers liegt. Dabei werden bevorzugt die nachfolgend aufgeführten Komponenten einbezogen: der Drehwinkelgeber 46 und/oder der Drehwinkelgeber 47 und/oder der Umrichter 27 und/oder die Steuereinheit 30 und/oder der Elektromotor 25 und/oder die Motoranschlussleitungen 58 und/oder die Bremsenanschlussleitungen 60 und/oder die Bremse 29 und/oder das Blattlager 48 und/oder das Getriebe 31.

Durch die Überprüfung gemäß Schritt 66 wird zunächst eine Aussage darüber getroffen, ob die Notstromversorgungseinrichtung 40 und/oder der elektrische Energiespeicher 41 grundsätzlich verfügbar ist (Batterie verf.). Insbesondere wird aber noch keine Aussage über den SoC-Zustand des Energiespeichers 41 getroffen. Die Überprüfung gemäß Schritt 66 erfolgt vorzugsweise zyklisch und wird insbesondere durch die Zentraleinheit 51 ausgelöst oder getriggert.

In einem siebten Schritt 67 wird der elektrische Energiespeicher 41 ergänzend auf Funktionsfähigkeit hin überprüft, insbesondere durch definierte Belastung des Energiespeichers 41 mit dem Elektromotor 25. Bevorzugt wird die Qualität des elektrischen Energiespeichers 41 beurteilt, insbesondere indem die Energiemenge und/oder die Strombelastung und/oder die Spannungsänderung des elektrischen Energiespeichers 41, die während der Prüfung gemäß Schritt 67 ermittelt wurden, als Grundlage für die Beurteilung genutzt werden. Es kann somit eine Aussage darüber getroffen werden, ob die verfügbare Energiemenge für eine Notabschaltung ausreichend ist. Insbesondere werden der SoC-Zustand und/oder der SoH-Zustand des Energiespeichers 41 bestimmt. Die Überprüfung gemäß Schritt 67 erfolgt vorzugsweise zyklisch und wird insbesondere durch die Zentraleinheit 51 ausgelöst oder getriggert.

Die Schritte 61 bis 67 werden bevorzugt nacheinander durchgeführt, insbesondere in der angegebenen Reihenfolge. Alternativ werden die Schritte 63 bis 67 nacheinander durchgeführt, insbesondere in der angegebenen Reihenfolge, wohingegen die Schritte 61 und 62 permanent durchgeführt werden. Die Schritte können aber auch in einer anderen Reihenfolge durchgeführt werden. Ferner ist es möglich, einen oder mehrere der Schritte 61 bis 67 wegzulassen und/oder einen oder mehrere andere Schritte hinzuzufügen.

### Bezugszeichenliste

- 1: Windkraftanlage
- 2: Turm
- 3: Fundament
- 4: Erdboden
- 5: Maschinenträger
- 6: Rotor
- 7: Rotorachse
- 8: elektrischer Generator
- 9: Rotorwelle
- 10: Rotornabe
- 11: Rotorblatt
- 12: Rotorblatt
- 13: Blattachse
- 14: Maschinenhaus
- 15: Betriebssteuereinrichtung
- 16: Blattwinkelverstellsystem
- 17: Wind
- 18: Blattwinkelverstellvorrichtung
- 19: Blattwinkelverstellvorrichtung
- 20: Blattwinkelsteuervorrichtung
- 21: Kommunikationsleitungen
- 22: Schnittstelle
- 23: Kommunikationsleitungen
- 24: Notabschaltungs-Steuerleitungen
- 25: Elektromotor
- 26: Motorwelle des Elektromotors
- 27: Umrichter
- 28: elektrische Stromversorgung
- 29: Bremse
- 30: Steuereinheit
- 31: Getriebe
- 32: Drehwinkelgebereinrichtung
- 33: Bremsenstrom-Erfassungseinrichtung
- 34: Eingangsstufe des Umrichters
- 35: Zwischenkreis des Umrichters
- 36: Zwischenkreiskondensator
- 37: Ausgangsstufe des Umrichters
- 38: Zwischenkreisspannungs-Erfassungseinrichtung
- 39: Zwischenkreisstrom-Erfassungseinrichtung
- 40: Notstromversorgungseinrichtung
- 41: elektrischer Energiespeicher
- 42: Anschlussleitung
- 43: Anschlussleitung
- 44: Sicherung
- 45: Diode
- 46: Drehwinkelgeber
- 47: Drehwinkelgeber
- 48: Blattlager
- 49: Blattlager
- 50: Überwachungseinheit
- 51: Zentraleinheit der Überwachungseinheit
- 52: Untereinheit der Überwachungseinheit
- 53: Untereinheit der Überwachungseinheit
- 54: Steuerbefehl
- 55: Notabschaltungs-Steuersignal (EFC)
- 56: Notabschaltungs-Steuersignal-Eingang
- 57: Notabschaltungs-Steuersignal-Eingang
- 58: Motoranschlussleitungen
- 59: Bremsensteuereinrichtung
- 60: Bremsenanschlussleitungen
- 61: erster Schritt der Überprüfung
- 62: zweiter Schritt der Überprüfung
- 63: dritter Schritt der Überprüfung
- 64: vierter Schritt der Überprüfung
- 65: fünfter Schritt der Überprüfung
- 66: sechster Schritt der Überprüfung
- 67: siebter Schritt der Überprüfung
- U: Zwischenkreisspannung
- I: Zwischenkreisstrom
- I_{B}: Bremsenstrom

## Patentansprüche

1. Windkraftanlage mit einem durch Windkraft drehbaren Rotor (6), der eine Rotornabe (10) und wenigstens ein an dieser drehbar gelagertes Rotorblatt (11) aufweist, einer übergeordneten Betriebssteuereinrichtung (15) und einem mit dieser in Kommunikationsverbindung stehenden und zur Notabschaltung der Windkraftanlage einsetzbare Komponenten aufweisenden Blattwinkelverstellsystem (16), mittels welchem das Rotorblatt (11) relativ zu der Rotornabe (10) drehbar und somit in unterschiedliche Blattwinkelstellungen positionierbar ist, wobei Steuerbefehle (54) zum Positionieren des Rotorblatts von der Betriebssteuereinrichtung (15) an das Blattwinkelverstellsystem (16) abgebbar sind und das Blattwinkelverstellsystem (16) in einem Normalbetrieb der Windkraftanlage den Steuerbefehlen (54) folgt und das Rotorblatt (11) entsprechend positioniert, wobei das Blattwinkelverstellsystem (16) zusätzlich eine parallel zum Normalbetrieb lauffähige Überwachungseinheit (50) aufweist, mittels welcher die Funktionsfähigkeit der oder eines Teils der Komponenten überprüfbar ist, **dadurch gekennzeichnet, dass** die Betriebssteuereinrichtung (15) mit dem Blattwinkelverstellsystem (16) durch wenigstens eine Notabschaltungs-Steuerleitung (24) verbunden ist, über welche wenigstens ein periodisches Notabschaltungs-Steuersignal (55) definierter Frequenz von der Betriebssteuereinrichtung (15) an das Blattwinkelverstellsystem (16) abgebbar ist, wobei die Komponenten die Notabschaltungs-Steuerleitung (24) umfassen und zur Überprüfung der Funktionsfähigkeit der Notabschaltungs-Steuerleitung (24) im Normalbetrieb wenigstens die Frequenz des Notabschaltungs-Steuersignals (55) mittels der Überwachungseinheit (50) überprüfbar ist.

2. Windkraftanlage nach Anspruch 1, **dadurch gekennzeichnet, dass** das Blattwinkelverstellsystem (16) wenigstens einen Umrichter (27), wenigstens einen dem Umrichter (27) nachgeschalteten und mechanisch mit dem Rotorblatt (11) verbundenen Elektromotor (25) und wenigstens eine Drehwinkelgebereinrichtung (32) umfasst, mittels welcher die Blattwinkelstellung des Rotorblatts (11) erfassbar ist.

3. Windkraftanlage nach Anspruch 2, **dadurch gekennzeichnet, dass** die Komponenten den Umrichter (27) und den Elektromotor (25) umfassen und zur Überprüfung der Funktionsfähigkeit dieser Komponenten im Normalbetrieb mittels der Überwachungseinheit (50) die Blattwinkelstellung des Rotorblatts (11) auf eine Änderung hin überprüfbar ist.

4. Windkraftanlage nach Anspruch 2 oder 3, **dadurch gekennzeichnet, dass** die Drehwinkelgebereinrichtung (32) wenigstens zwei Drehwinkelgeber (46, 47) umfasst, mittels welchen unabhängig voneinander die Blattwinkelstellung des Rotorblatts (11) erfassbar ist, wobei die Komponenten die Drehwinkelgebereinrichtung (32) umfassen und zur Überprüfung der Funktionsfähigkeit der Drehwinkelgebereinrichtung (32) im Normalbetrieb mittels der Überwachungseinheit (50) die von den unterschiedlichen Drehwinkelgebern (46, 47) erfassten Drehwinkelstellungen auf Plausibilität hin überprüfbar sind.

5. Windkraftanlage nach einem der Ansprüche 2 bis 4, **dadurch gekennzeichnet, dass** der Umrichter (27) eine an eine elektrische Stromversorgung (28) angeschlossene Eingangsstufe (34), einen der Eingangsstufe (34) nachgeschalteten Zwischenkreis (35) und eine dem Zwischenkreis (35) nachgeschaltete Ausgangsstufe (37) umfasst, an welche der Elektromotor (25) angeschlossen ist, und das Blattwinkelverstellsystem (16) wenigstens einen an den Zwischenkreis (35) angeschlossenen elektrischen Energiespeicher (41) und eine Zwischenkreisspannungs-Erfassungseinrichtung (38) umfasst, mittels welcher eine an dem Zwischenkreis (35) anliegende elektrische Zwischenkreisspannung (U) erfassbar ist, wobei die Komponenten den Energiespeicher (41) umfassen und zur Überprüfung der Funktionsfähigkeit des Energiespeichers (41) im Normalbetrieb mittels der Überwachungseinheit (50) die Eingangsstufe (34) zum Herabsetzen der Zwischenkreisspannung (U) von einer Zwischenkreis-Nennspannung auf eine unter dieser liegende Prüfspannung ansteuerbar ist, die unter einer dem Energiespeicher (41) zugeordneten Mindestspannung liegt, und die Zwischenkreisspannung (U) mit der Mindestspannung vergleichbar ist.

6. Windkraftanlage nach Anspruch 5, **dadurch gekennzeichnet, dass** die Prüfspannung derart hoch ist, dass der Umrichter (27) und der Elektromotor (25) auch bei an dem Zwischenkreis (35) anliegender Prüfspannung betreibbar sind.

7. Windkraftanlage nach Anspruch 5 oder 6, **dadurch gekennzeichnet, dass** das Blattwinkelverstellsystem (16) eine Energiespeicherstrom-Erfassungseinrichtung (39) umfasst, mittels welcher ein von dem Energiespeicher (41) abgegebener elektrischer Energiespeicherstrom (I) erfassbar ist, wobei zur ergänzenden Überprüfung der Funktionsfähigkeit des Energiespeichers (41) im Normalbetrieb mittels der Überwachungseinheit (50) die Ausgangsstufe (37) derart ansteuerbar ist, dass der Energiespeicher (41) über den Umrichter (27) mit dem Elektromotor (25) elektrisch belastbar ist, während die Eingangsstufe (34) von der Überwachungseinheit (50) zum Herabsetzen der Zwischenkreisspannung (U) auf die Prüfspannung angesteuert ist, die Entladung des Energiespeichers (41) beobachtbar ist, aus der Beobachtung der Entladung wenigstens eine den aktuellen Zustand des elektrischen Energiespeichers (41) charakterisierende Information bildbar ist und der aktuelle Zustand des Energiespeichers (41) mit vorgegebenen Anforderungen an dessen Zustand vergleichbar ist.

8. Windkraftanlage nach Anspruch 7, **dadurch gekennzeichnet, dass** eine oder mehrere an dem Elektromotor (25) anliegende elektrische Motorspannungen mittels der Überwachungseinheit (50) derart modulierbar sind, dass eine definierte elektrische Belastung des Energiespeichers (41) ohne oder ohne wesentliche Änderung der aktuell von dem Elektromotor (25) abgegebenen mechanischen Leistung erzielbar ist.

9. Windkraftanlage nach einem der vorangehenden Ansprüche, **dadurch gekennzeichnet, dass** das Blattwinkelverstellsystem (16) wenigstens eine elektrisch betätigbare Bremse (29), mittels welcher das Rotorblatt (11) bezüglich einer Drehung relativ zu der Rotornabe (10) festsetzbar oder bremsbar ist, und eine Bremsenstrom-Erfassungseinrichtung (33) umfasst, mittels welcher ein der Bremse (29) zugeführter elektrischer Bremsenstrom (I_{B}) erfassbar ist, wobei die Komponenten die Bremse (29) umfassen und zur Überprüfung der Funktionsfähigkeit der Bremse (29) mittels der Überwachungseinheit (50) der Bremsenstrom (IB) auf Plausibilität hin überprüfbar ist.

10. Verfahren zum Überprüfen der Funktionsfähigkeit von zur Notabschaltung einer Windkraftanlage einsetzbarerer Komponenten, die einen durch Windkraft drehbaren Rotor (6), der eine Rotornabe (10) und wenigstens ein an dieser drehbar gelagertes Rotorblatt (11) aufweist, eine übergeordnete Betriebssteuereinrichtung (15) und ein mit dieser in Kommunikationsverbindung stehendes und die Komponenten aufweisendes Blattwinkelverstellsystem (16) umfasst, mittels welchem das Rotorblatt (11) relativ zu der Rotornabe (10) drehbar und somit in unterschiedliche Blattwinkelstellungen positionierbar ist, wobei Steuerbefehle (54) zum Positionieren des Rotorblatts (11) von der Betriebssteuereinrichtung (15) an das Blattwinkelverstellsystem (16) abgegeben werden und das Blattwinkelverstellsystem (16) in einem Normalbetrieb der Windkraftanlage den Steuerbefehlen (54) folgt und das Rotorblatt (11) entsprechend positioniert, wobei das Blattwinkelverstellsystem (16) zusätzlich eine parallel zum Normalbetrieb laufende Überwachungseinheit (50) aufweist, mittels welcher die Funktionsfähigkeit der oder eines Teils der Komponenten überprüft wird, **dadurch gekennzeichnet, dass** die Betriebssteuereinrichtung (15) mit dem Blattwinkelverstellsystem (16) durch wenigstens eine Notabschaltungs-Steuerleitung (24) verbunden ist, über welche wenigstens ein periodisches Notabschaltungs-Steuersignal (55) definierter Frequenz von der Betriebssteuereinrichtung (15) an das Blattwinkelverstellsystem (16) abgegeben wird, wobei die Komponenten die Notabschaltungs-Steuerleitung (24) umfassen und zur Überprüfung der Funktionsfähigkeit der Notabschaltungs-Steuerleitung (24) im Normalbetrieb wenigstens die Frequenz des Notabschaltungs-Steuersignals (55) mittels der Überwachungseinheit (50) überprüft wird.

11. Verfahren nach Anspruch 10, **dadurch gekennzeichnet, dass** das Blattwinkelverstellsystem (16) wenigstens einen Umrichter (27), wenigstens einen dem Umrichter (27) nachgeschalteten und mechanisch mit dem Rotorblatt (11) verbundenen Elektromotor (25) und wenigstens eine Drehwinkelgebereinrichtung (32) umfasst, mittels welcher die Blattwinkelstellung des Rotorblatts (11) erfasst wird.

12. Verfahren nach Anspruch 11, **dadurch gekennzeichnet, dass** die Komponenten den Umrichter (27) und den Elektromotor (25) umfassen und zur Überprüfung der Funktionsfähigkeit dieser Komponenten im Normalbetrieb mittels der Überwachungseinheit (50) die Blattwinkelstellung des Rotorblatts (11) auf eine Änderung hin überprüft wird.

13. Verfahren nach Anspruch 11 oder 12, **dadurch gekennzeichnet, dass** die Drehwinkelgebereinrichtung (32) wenigstens zwei Drehwinkelgeber (46, 47) umfasst, mittels welchen unabhängig voneinander die Blattwinkelstellung des Rotorblatts (11) erfasst wird, wobei die Komponenten die Drehwinkelgebereinrichtung (32) umfassen und zur Überprüfung der Funktionsfähigkeit der Drehwinkelgebereinrichtung (32) im Normalbetrieb mittels der Überwachungseinheit (50) die von den unterschiedlichen Drehwinkelgebern (46, 47) erfassten Drehwinkelstellungen auf Plausibilität hin überprüft werden.

14. Verfahren nach einem der Ansprüche 11 bis 13, **dadurch gekennzeichnet, dass** der Umrichter (27) eine an eine elektrische Stromversorgung (28) angeschlossene Eingangsstufe (34), einen der Eingangsstufe (34) nachgeschalteten Zwischenkreis (35) und eine dem Zwischenkreis (35) nachgeschaltete Ausgangsstufe (37) umfasst, an welche der Elektromotor (25) angeschlossen ist, und das Blattwinkelverstellsystem (16) wenigstens einen an den Zwischenkreis (35) angeschlossenen elektrischen Energiespeicher (41) und eine Zwischenkreisspannungs-Erfassungseinrichtung (38) umfasst, mittels welcher eine an dem Zwischenkreis (35) anliegende elektrische Zwischenkreisspannung (U) erfasst wird, wobei die Komponenten den Energiespeicher (41) umfassen und zur Überprüfung der Funktionsfähigkeit des Energiespeichers (41) im Normalbetrieb mittels der Überwachungseinheit (50) die Eingangsstufe (34) zum Herabsetzen der Zwischenkreisspannung (U) von einer Zwischenkreis-Nennspannung auf eine unter dieser liegende Prüfspannung angesteuert wird, die unter einer dem Energiespeicher (41) zugeordneten Mindestspannung liegt, und die Zwischenkreisspannung (U) mit der Mindestspannung verglichen wird.

15. Verfahren nach Anspruch 14, **dadurch gekennzeichnet, dass** die Prüfspannung derart hoch ist, dass der Umrichter (27) und der Elektromotor (25) auch bei an dem Zwischenkreis (35) anliegender Prüfspannung betrieben werden können.

16. Verfahren nach Anspruch 14 oder 15, **dadurch gekennzeichnet, dass** das Blattwinkelverstellsystem (16) eine Energiespeicherstrom-Erfassungseinrichtung (39) umfasst, mittels welcher ein von dem Energiespeicher (41) abgegebener elektrischer Energiespeicherstrom (I) erfasst wird, wobei zur ergänzenden Überprüfung der Funktionsfähigkeit des Energiespeichers (41) im Normalbetrieb mittels der Überwachungseinheit (50) die Ausgangsstufe (37) derart angesteuert wird, dass der Energiespeicher (41) über den Umrichter (27) mit dem Elektromotor (25) elektrisch belastet wird, während die Eingangsstufe (34) von der Überwachungseinheit (50) zum Herabsetzen der Zwischenkreisspannung (U) auf die Prüfspannung angesteuert wird, die Entladung des Energiespeichers (41) beobachtet wird, aus der Beobachtung der Entladung wenigstens eine den aktuellen Zustand des elektrischen Energiespeichers (41) charakterisierende Information gebildet wird und der aktuelle Zustand des Energiespeichers (41) mit vorgegebenen Anforderungen an dessen Zustand verglichen wird.

17. Verfahren nach Anspruch 16, **dadurch gekennzeichnet, dass** eine oder mehrere an dem Elektromotor (25) anliegende elektrische Motorspannungen mittels der Überwachungseinheit (50) derart moduliert werden, dass eine definierte elektrische Belastung des Energiespeichers (41) ohne Änderung der von dem Elektromotor (25) aktuell abgegebenen mechanischen Leistung erzielt wird.

18. Verfahren nach einem der Ansprüche 10 bis 17, **dadurch gekennzeichnet, dass** das Blattwinkelverstellsystem (16) wenigstens eine elektrisch betätigbare Bremse (29), mittels welcher das Rotorblatt (11) bezüglich einer Drehung relativ zu der Rotornabe (10) festsetzbar oder bremsbar ist, und eine Bremsenstrom-Erfassungseinrichtung (33) umfasst, mittels welcher ein der Bremse (29 zugeführter elektrischer Bremsenstrom (I_{B}) erfassbar ist, wobei die Komponenten die Bremse (29) umfassen und zur Überprüfung der Funktionsfähigkeit der Bremse (29) mittels der Überwachungseinheit (50) der Bremsenstrom (I_{B}) auf Plausibilität hin überprüft wird.

## Claims

1. Wind turbine with a rotor (6) rotatable by way of wind power, which has a rotor hub (10) and at least one rotor blade (11) rotatably mounted thereon, a superordinate operational control apparatus (15) and a blade angle adjustment system (16) in communicative connection with said superordinate operational control apparatus and having components that can be used for the emergency shutdown of the wind turbine, by means of which blade angle adjustment system the rotor blade (11) is rotatable relative to the rotor hub (10) and therefore can be positioned in different blade angle positions, wherein control commands (54) to position the rotor blade (11) can be emitted from the operational control apparatus (15) to the blade angle adjustment system (16) and the blade angle adjustment system (16) follows the control commands (54) in a normal operation of the wind turbine and positions the rotor blade (11) accordingly, wherein the blade angle adjustment system (16) also has a monitoring unit (50) that can operate parallel to normal operation, by means of which the functionality of the or a part of the components can be checked, **characterised in that** the operational control apparatus (15) is connected to the blade angle adjustment system (16) by way of at least one emergency shutdown control line (24), via which at least one periodic emergency shutdown control signal (55) of defined frequency can be emitted from the operational control apparatus (15) to the blade angle adjustment system (16), wherein the components comprise the emergency shutdown control line (24) and in order to check the functionality of the emergency shutdown control line (24) in normal operation at least the frequency of the emergency shutdown control signal (55) can be checked by means of the monitoring unit (50).

2. Wind turbine according to claim 1, **characterised in that** the blade angle adjustment system (16) comprises at least one inverter (27), at least one electric motor (25) arranged downstream from the inverter (27) and mechanically connected to the rotor blade (11) and at least one rotational angle sensor apparatus (32), by means of which the blade angle position of the rotor blade (11) can be detected.

3. Wind turbine according to claim 2, **characterised in that** the components comprise the inverter (27) and the electric motor (25) and in order to check the functionality of these components in normal operation by means of the monitoring unit (50) the blade angle position of the rotor blade (11) can be checked for a change.

4. Wind turbine according to claim 2 or 3, **characterised in that** the rotational angle sensor apparatus (32) comprises at least two rotational angle sensors (46, 47), by means of which independently of one another the blade angle position of the rotor blade (11) can be detected, wherein the components comprise the rotational angle sensor apparatus (32) and in order to check the functionality of the rotational angle sensor apparatus (32) in normal operation by means of the monitoring unit (50) the rotational angle positions detected by the different rotational angle sensors (46, 47) can be checked for plausibility.

5. Wind turbine according to any one of claims 2 to 4, **characterised in that** the inverter (27) comprises an input stage (34) connected to an electric power supply (28), an intermediate circuit (35) arranged downstream of the input stage (34) and an output stage (37) arranged downstream of the intermediate circuit (35), to which the electric motor (25) is connected and the blade angle adjustment system (16) comprises at least one electric energy storage device (41) connected to the intermediate circuit (35) and an intermediate circuit voltage detection apparatus (38), by means of which an electric intermediate circuit voltage (U) applied to the intermediate circuit (35) can be detected, wherein the components comprise the energy storage device (41) and in order to check the functionality of the energy storage device (41) in normal operation by means of the monitoring unit (50) the input stage (34) can be actuated to reduce the intermediate circuit voltage (U) from an intermediate circuit nominal voltage to a test voltage below this, which is below a minimum voltage assigned to the energy storage device (41) and the intermediate circuit voltage (U) can be compared with the minimum voltage.

6. Wind turbine according to claim 5, **characterised in that** the test voltage is so high that the inverter (27) and the electric motor (25) can also be operated at the test voltage applied to the intermediate circuit (35).

7. Wind turbine according to claim 5 or 6, **characterised in that** the blade angle adjustment system (16) comprises an energy storage power detection apparatus (39), by means of which an electric energy storage power (I) emitted by the energy storage device (41) can be detected, wherein in order to additionally check the functionality of the energy storage device (41) in normal operation by means of the monitoring unit (50) the output stage (37) can be actuated such that the energy storage device (41) can be electrically charged via the inverter (27) with the electric motor (25), while the input stage (34) is actuated by the monitoring unit (50) to reduce the intermediate circuit voltage (U) to the test voltage, the discharge of the energy storage device (41) can be monitored, from the monitoring of the discharge at least one item of information characterising the current status of the electric energy storage device (41) can be defined and the current status of the energy storage device (41) can be compared with predefined requirements for its status.

8. Wind turbine according to claim 7, **characterised in that** one or a plurality of electric motor voltages applied to the electric motor (25) can be modulated by means of the monitoring unit (50) such that a defined electric charging of the energy storage device (41) can be achieved without or without significant change to the mechanical output currently provided by the electric motor (25).

9. Wind turbine according to any one of the preceding claims, **characterised in that** the blade angle adjustment system (16) comprises at least one electrically actuatable brake (29), by means of which the rotor blade (11) can be fixed or braked in relation to a rotation relative to the rotor hub (10) and comprises a brake power detection apparatus (33), by means of which an electric brake power (I_{B}) supplied to the brake (29) can be detected, wherein the components comprise the brake (29) and in order to check the functionality of the brake (29) by means of the monitoring unit (50) the brake power (I_{B}) can be checked for plausibility.

10. Method for checking the functionality of components that can be used for the emergency shutdown of a wind turbine, which comprises a rotor (6) rotatable by way of wind power, which has a rotor hub (10) and at least one rotor blade (11) rotatably mounted thereon, a superordinate operational control apparatus (15) and a blade angle adjustment system (16) in communicative connection with said superordinate operational control apparatus and having the components, by means of which blade angle adjustment system the rotor blade (11) is rotatable relative to the rotor hub (10) and therefore can be positioned in different blade angle positions, wherein control commands (54) to position the rotor blade (11) are emitted from the operational control apparatus (15) to the blade angle adjustment system (16) and the blade angle adjustment system (16) follows the control commands (54) in a normal operation of the wind turbine and positions the rotor blade (11) accordingly, wherein the blade angle adjustment system (16) also has a monitoring unit (50) that operates parallel to normal operation, by means of which the functionality of the or a part of the components is checked, **characterised in that** the operational control apparatus (15) is connected to the blade angle adjustment system (16) by way of at least one emergency shutdown control line (24), via which at least one periodic emergency shutdown control signal (55) of defined frequency is emitted from the operational control apparatus (15) to the blade angle adjustment system (16), wherein the components comprise the emergency shutdown control line (24) and in order to check the functionality of the emergency shutdown control line (24) in normal operation at least the frequency of the emergency shutdown control signal (55) is checked by means of the monitoring unit (50).

11. Method according to claim 10, **characterised in that** the blade angle adjustment system (16) comprises at least one inverter (27), at least one electric motor (25) arranged downstream from the inverter (27) and mechanically connected to the rotor blade (11) and at least one rotational angle sensor apparatus (32), by means of which the blade angle position of the rotor blade (11) is detected.

12. Method according to claim 11, **characterised in that** the components comprise the inverter (27) and the electric motor (25) and in order to check the functionality of these components in normal operation by means of the monitoring unit (50) the blade angle position of the rotor blade (11) is checked for a change.

13. Method according to claim 11 or 12, **characterised in that** the rotational angle sensor apparatus (32) comprises at least two rotational angle sensors (46, 47), by means of which independently of one another the blade angle position of the rotor blade (11) is detected, wherein the components comprise the rotational angle sensor apparatus (32) and in order to check the functionality of the rotational angle sensor apparatus (32) in normal operation by means of the monitoring unit (50) the rotational angle positions detected by the different rotational angle sensors (46, 47) are checked for plausibility.

14. Method according to claim 11 to 13, **characterised in that** the inverter (27) comprises an input stage (34) connected to an electric power supply (28), an intermediate circuit (35) arranged downstream of the input stage (34) and an output stage (37) arranged downstream of the intermediate circuit (35), to which the electric motor (25) is connected and the blade angle adjustment system (16) comprises at least one electric energy storage device (41) connected to the intermediate circuit (35) and an intermediate circuit voltage detection apparatus (38), by means of which an electric intermediate circuit voltage (U) applied to the intermediate circuit (35) is detected, wherein the components comprise the energy storage device (41) and in order to check the functionality of the energy storage device (41) in normal operation by means of the monitoring unit (50) the input stage (34) is actuated to reduce the intermediate circuit voltage (U) from an intermediate circuit nominal voltage to a test voltage below this, which is below a minimum voltage assigned to the energy storage device (41) and the intermediate circuit voltage (U) is compared with the minimum voltage.

15. Method according to claim 14, **characterised in that** the test voltage is so high that the inverter (27) and the electric motor (25) can also be operated at the test voltage applied to the intermediate circuit (35).

16. Method according to claim 14 or 15, **characterised in that** the blade angle adjustment system (16) comprises an energy storage power detection apparatus (39), by means of which an electric energy storage power (I) emitted by the energy storage device (41) is detected, wherein in order to additionally check the functionality of the energy storage device (41) in normal operation by means of the monitoring unit (50) the output stage (37) is actuated such that the energy storage device (41) is electrically charged via the inverter (27) with the electric motor (25), while the input stage (27) is actuated by the monitoring unit (50) to reduce the intermediate circuit voltage (U) to the test voltage, the discharge of the energy storage device (41) is monitored, from the monitoring of the discharge at least one item of information characterising the current status of the electric energy storage device (41) is defined and the current status of the energy storage device (41) is compared with predefined requirements for its status.

17. Method according to claim 16, **characterised in that** one or a plurality of electric motor voltages applied to the electric motor (25) are modulated by means of the monitoring unit (50) such that a defined electric charging of the energy storage device (41) is achieved without a change to the mechanical output currently provided by the electric motor (25).

18. Method according to any one of claims 10 to 17, **characterised in that** the blade angle adjustment system (16) comprises at least one electrically actuatable brake (29), by means of which the rotor blade (11) can be fixed or braked in relation to a rotation relative to the rotor hub (10) and comprises a brake power detection apparatus (33), by means of which an electric brake power (I_{B}) supplied to the brake (29) can be detected, wherein the components comprise the brake (29) and in order to check the functionality of the brake (29) by means of the monitoring unit (50) the brake power (I_{B}) is checked for plausibility.

## Revendications

1. Éolienne avec un rotor (6) mis en rotation par la force du vent, qui comprend un moyeu de rotor (10) et au moins une pale de rotor (11) logée de manière rotative au niveau de celui-ci, un dispositif de contrôle de fonctionnement principal (15) et un système de réglage d'angle de pale (16), en liaison de communication avec celui-ci et comprenant des composants utilisables pour l'arrêt d'urgence de l'éolienne, au moyen duquel la pale de rotor (11) peut tourner par rapport au moyeu de rotor (10) et peut donc être positionnée dans différentes positions angulaires de pale, dans laquelle des instructions de commande (54) peuvent être envoyées par le dispositif de contrôle de fonctionnement (15) au système de réglage d'angle de pale (16) pour le positionnement de la pale du rotor et le système de réglage d'angle de pale (16) suit, lors du fonctionnement normal de l'éolienne, les instructions de commande (54) et la pale du rotor (11) est positionnée en conséquence, dans laquelle le système de réglage d'angle de pale (16) comprend en outre une unité de surveillance (50) pouvant fonctionner parallèlement au fonctionnement normal, au moyen de laquelle la fonctionnalité des ou d'une partie des composants peut être vérifiée, **caractérisée en ce que** le dispositif de contrôle de fonctionnement (15) est relié avec le système de réglage d'angle de pale (16) à l'aide d'au moins une ligne de contrôle d'arrêt d'urgence (24), par l'intermédiaire de laquelle au moins un signal de commande d'arrêt d'urgence périodique (55) d'une fréquence définie peut être envoyé par le dispositif de contrôle de fonctionnement (15) au système de réglage d'angle de pale (16), dans laquelle les composants comprennent la ligne de commande d'arrêt d'urgence (24) et, pour la vérification de la fonctionnalité de la ligne de commande d'arrêt d'urgence (24) en fonctionnement normal, au moins la fréquence du signal de commande d'arrêt d'urgence (55) peut être vérifiée au moyen de l'unité de surveillance (50).

2. Éolienne selon la revendication 1, **caractérisée en ce que** le système de réglage d'angle de pale (16) comprend au moins un convertisseur (27), au moins un moteur électrique (25) branché en aval du convertisseur (27) et relié mécaniquement avec la pale de rotor (11) et au moins un dispositif à capteurs d'angle de rotation (32) au moyen duquel la position angulaire de la pale rotor (11) peut être mesurée.

3. Éolienne selon la revendication 2, **caractérisée en ce que** les composants comprennent le convertisseur (27) et le moteur électrique (25) et, pour la vérification de la fonctionnalité de ces composants en fonctionnement normal, une modification de la position angulaire de la pale du rotor (11) peut être détectée au moyen de l'unité de surveillance (50).

4. Éolienne selon la revendication 2 ou 3, **caractérisée en ce que** le dispositif à capteurs d'angle de rotation (32) comprend au moins deux capteurs d'angle de rotation (46, 47) au moyen desquels, indépendamment l'un de l'autre, la position angulaire de la pale de rotor (11) peut être mesurée, dans laquelle les composants comprennent le dispositif à capteurs d'angle de rotation (32) et, pour la vérification de la fonctionnalité du dispositif à capteurs d'angle de rotation (32) en fonctionnement normal, l'unité de surveillance (50) permet de vérifier la plausibilité des positions angulaires mesurées par les différents capteurs d'angle de rotation (46, 47).

5. Éolienne selon l'une des revendications 2 à 4, **caractérisée en ce que** le convertisseur (27) comprend un étage d'entrée (34) raccordé à une alimentation électrique (28), un circuit intermédiaire (35) branché en aval de l'étage d'entrée (34) et un étage de sortie (37) branché en aval du circuit intermédiaire (35), auquel le moteur électrique (25) est raccordé et le système de réglage d'angle de pale (16) comprend au moins un accumulateur d'énergie électrique (41) raccordé au circuit intermédiaire (35) et un dispositif de mesure de tension de circuit intermédiaire (38) au moyen duquel une tension de circuit intermédiaire (U) appliquée au circuit intermédiaire (35) peut être mesurée, dans laquelle les composants comprennent l'accumulateur d'énergie (41) et, pour la vérification de la fonctionnalité de l'accumulateur d'énergie (41) en fonctionnement normal, l'unité de surveillance (50) permet de contrôler l'étage d'entrée (34) afin de diminuer la tension de circuit intermédiaire (U) d'une tension nominale de circuit intermédiaire à une tension de vérification située en dessous de celle-ci, qui se trouve en dessous d'une tension minimale correspondant à l'accumulateur d'énergie (41) et la tension de circuit intermédiaire (U) peut être comparée avec la tension minimale.

6. Éolienne selon la revendication 5, **caractérisée en ce que** la tension de vérification est telle que le convertisseur (27) et le moteur électrique (25) peuvent fonctionner même lorsqu'une tension de vérification est appliquée au circuit intermédiaire (35).

7. Éolienne selon la revendication 5 ou 6, **caractérisée en ce que** le système de réglage d'angle de pale (16) comprend un dispositif de mesure de courant d'accumulateur d'énergie (39) au moyen duquel un courant d'accumulateur d'énergie (I) généré par l'accumulateur d'énergie (41) peut être mesuré, dans laquelle, pour une vérification complémentaire de la fonctionnalité de l'accumulateur d'énergie (41) en fonctionnement normal, l'unité de surveillance (50) permet de contrôler l'étage de sortie (37) de façon à ce que l'accumulateur d'énergie (41) puisse être chargé électriquement par l'intermédiaire du convertisseur (27) avec le moteur électrique (25), tandis que l'étage d'entrée (34) est contrôlé par l'unité de surveillance (50) afin de diminuer la tension de circuit intermédiaire (U) vers la tension de vérification, la décharge de l'accumulateur d'énergie (41) peut être constatée, à partir de la constatation de la décharge, au moins une information caractérisant l'état actuel de l'accumulateur d'énergie électrique (41) peut être générée et l'état actuel de l'accumulateur d'énergie (41) peut être comparé avec des exigences prédéterminées concernant cet état.

8. Éolienne selon la revendication 7, **caractérisée en ce qu'**une ou plusieurs tensions de moteur appliquées au moteur électrique (25) peuvent être modulées au moyen de l'unité de surveillance (50) de façon à ce qu'une charge électrique définie de l'accumulateur d'énergie (41) puisse être obtenue sans aucune modification ou sans modification importante de la puissance mécanique générée actuellement par le moteur électrique (25).

9. Éolienne selon l'une des revendications précédentes, **caractérisée en ce que** le système de réglage d'angle de pale (16) comprend au moins un frein (29) à actionnement électrique au moyen duquel la pale de rotor (11) peut être immobilisée ou freinée en ce qui concerne une rotation par rapport au moyeu de rotor (10) et comprend un dispositif de mesure de courant de frein (33) au moyen duquel un courant électrique de frein (I_{B}) introduit dans le frein (29) peut être mesuré, dans laquelle les composants comprennent le frein (29) et, pour la vérification de la fonctionnalité du frein (29), l'unité de surveillance (50) permet de vérifier la plausibilité du courant de frein (I_{B}).

10. Procédé de vérification de la fonctionnalité des composants utilisables pour l'arrêt d'urgence d'une éolienne, qui comprend un rotor (6) mis en rotation par la force du vent, qui comprend un moyeu de rotor (10) et au moins une pale de rotor (11) logée de manière rotative au niveau de celui-ci, un dispositif de contrôle de fonctionnement principal (15) et un système de réglage d'angle de pale (16), en liaison de communication avec celui-ci et comprenant les composants, au moyen duquel la pale de rotor (11) peut tourner par rapport au moyeu de rotor (10) et peut donc être positionnée dans différentes positions angulaires de pale, dans lequel des instructions de commande (54) peuvent être envoyées par le dispositif de contrôle de fonctionnement (15) au système de réglage d'angle de pale (16) pour le positionnement de la pale du rotor (11) et le système de réglage d'angle de pale (16) suit, lors du fonctionnement normal de l'éolienne, les instructions de commande (54) et la pale du rotor (11) est positionnée en conséquence, dans lequel le système de réglage d'angle de pale (16) comprend en outre une unité de surveillance (50) fonctionnant parallèlement au fonctionnement normal, au moyen de laquelle la fonctionnalité du ou d'une partie des composants est vérifiée, **caractérisé en ce que** le dispositif de contrôle de fonctionnement (15) est relié avec le système de réglage d'angle de pale (16) à l'aide d'au moins une ligne de contrôle d'arrêt d'urgence (24), par l'intermédiaire de laquelle au moins un signal de commande d'arrêt d'urgence périodique (55) d'une fréquence définie peut être envoyé par le dispositif de contrôle de fonctionnement (15) au système de réglage d'angle de pale (16), dans lequel les composants comprennent la ligne de commande d'arrêt d'urgence (24) et, pour la vérification de la fonctionnalité de la ligne de commande d'arrêt d'urgence (24) en fonctionnement normal, au moins la fréquence du signal de commande d'arrêt d'urgence (55) peut être vérifiée au moyen de l'unité de surveillance (50).

11. Procédé selon la revendication 10, **caractérisé en ce que** le système de réglage d'angle de pale (16) comprend au moins un convertisseur (27), au moins un moteur électrique (25) branché en aval du convertisseur (27) et relié mécaniquement avec la pale de rotor (11) et au moins un dispositif à capteurs d'angle de rotation (32) au moyen duquel la position angulaire de la pale rotor (11) est mesurée.

12. Procédé selon la revendication 11, **caractérisé en ce que** les composants comprennent le convertisseur (27) et le moteur électrique (25) et, pour la vérification de la fonctionnalité de ces composants en fonctionnement normal, une modification de la position angulaire de la pale du rotor (11) peut être détectée au moyen de l'unité de surveillance (50).

13. Procédé selon la revendication 11 ou 12, **caractérisé en ce que** le dispositif à capteurs d'angle de rotation (32) comprend au moins deux capteurs d'angle de rotation (46, 47) au moyen desquels, indépendamment entre eux, la position angulaire de la pale de rotor (11) est mesurée, dans lequel les composants comprennent le dispositif à capteurs d'angle de rotation (32) et, pour la vérification de la fonctionnalité du dispositif à capteurs d'angle de rotation (32) en fonctionnement normal, l'unité de surveillance (50) permet de vérifier la plausibilité des positions angulaires mesurées par les différents capteurs d'angle de rotation (46, 47).

14. Procédé selon l'une des revendications 11 à 13, **caractérisé en ce que** e convertisseur (27) comprend un étage d'entrée (34) raccordé à une alimentation électrique (28), un circuit intermédiaire (35) branché en aval de l'étage d'entrée (34) et un étage de sortie (37) branché en aval du circuit intermédiaire (35), auquel le moteur électrique (25) est raccordé et le système de réglage d'angle de pale (16) comprend au moins un accumulateur d'énergie électrique (41) raccordé au circuit intermédiaire (35) et un dispositif de mesure de tension de circuit intermédiaire (38) au moyen duquel une tension de circuit intermédiaire (U) appliquée au circuit intermédiaire (35) peut être mesurée, dans laquelle les composants comprennent l'accumulateur d'énergie (41) et, pour la vérification de la fonctionnalité de l'accumulateur d'énergie (41) en fonctionnement normal, l'unité de surveillance (50) permet de contrôler l'étage d'entrée (34) afin de diminuer la tension de circuit intermédiaire (U) d'une tension nominale de circuit intermédiaire à une tension de vérification située en dessous de celle-ci, qui se trouve en dessous d'une tension minimale correspondant à l'accumulateur d'énergie (41) et la tension de circuit intermédiaire (U) est comparée avec la tension minimale.

15. Procédé selon la revendication 14, **caractérisé en ce que** la tension de vérification est telle que le convertisseur (27) et le moteur électrique (25) peuvent fonctionner même lorsqu'une tension de vérification est appliquée au circuit intermédiaire (35).

16. Procédé selon la revendication 14 ou 15, **caractérisé en ce que** le système de réglage d'angle de pale (16) comprend un dispositif de mesure de courant d'accumulateur d'énergie (39) au moyen duquel un courant d'accumulateur d'énergie (I) généré par l'accumulateur d'énergie (41) peut être mesuré, dans lequel, pour une vérification complémentaire de la fonctionnalité de l'accumulateur d'énergie (41) en fonctionnement normal, l'unité de surveillance (50) permet de contrôler l'étage de sortie (37) de façon à ce que l'accumulateur d'énergie (41) puisse être chargé électriquement par l'intermédiaire du convertisseur (27) avec le moteur électrique (25), tandis que l'étage d'entrée (34) est contrôlé par l'unité de surveillance (50) afin de diminuer la tension de circuit intermédiaire (U) vers la tension de vérification, la décharge de l'accumulateur d'énergie (41) est constatée, à partir de la constatation de la décharge, au moins une information caractérisant l'état actuel de l'accumulateur d'énergie électrique (41) est générée et l'état actuel de l'accumulateur d'énergie (41) est comparé avec des exigences prédéterminées concernant cet état.

17. Procédé selon la revendication 16, **caractérisé en ce qu'**une ou plusieurs tensions de moteur appliquées au moteur électrique (25) peuvent être modulées au moyen de l'unité de surveillance (50) de façon à ce qu'une charge électrique définie de l'accumulateur d'énergie (41) puisse être obtenue sans aucune modification ou sans modification importante de la puissance mécanique générée actuellement par le moteur électrique (25).

18. Procédé selon l'une des revendications 10 à 17, **caractérisé en ce que** le système de réglage d'angle de pale (16) comprend au moins un frein (29) à actionnement électrique au moyen duquel la pale de rotor (11) peut être immobilisée ou freinée en ce qui concerne une rotation par rapport au moyeu de rotor (10) et comprend un dispositif de mesure de courant de frein (33) au moyen duquel un courant électrique de frein (I_{B}) introduit dans le frein (29) peut être mesuré, dans lequel les composants comprennent le frein (29) et, pour la vérification de la fonctionnalité du frein (29), l'unité de surveillance (50) permet de vérifier la plausibilité du courant de frein (I_{B}).
